(19) Europäisches Patentamt
European Patent Office
Office européen des brevets

(11) EP 1 797 947 B1

(12) **EUROPEAN PATENT SPECIFICATION**

(45) Date of publication and mention of the grant of the patent:
**27.03.2013 Bulletin 2013/13**

(51) Int Cl.:
***B01J 13/02*** *(2006.01)* ***B01J 13/20*** *(2006.01)*
***B01J 13/22*** *(2006.01)*

(21) Application number: **06256326.7**

(22) Date of filing: **12.12.2006**

(54) **Encapsulated active material with reduced formaldehyde potential**

Eingekapselter Wirkstoff mit reduziertem Formaldehydpotential

Matériel actif encapsulé avec potentiel de formaldéhyde réduit

(84) Designated Contracting States:
**DE ES FR GB IT**

(30) Priority: **15.12.2005 US 304089**
**17.10.2006 US 550002**

(43) Date of publication of application:
**20.06.2007 Bulletin 2007/25**

(60) Divisional application:
**12175367.7 / 2 545 988**

(73) Proprietor: **International Flavors & Fragrances, Inc.**
**New York**
**New York 10019 (US)**

(72) Inventors:
- **Lee, Kaiping**
  **Morganville, NJ 07751 (US)**
- **Popplewell, Lewis M.**
  **Morganville, NJ 07751 (US)**
- **Anastasiou, Theodore J.**
  **Holmdel, NJ 07733 (US)**
- **Lei, Yabin**
  **Holmdel, NJ 07733 (US)**

(74) Representative: **Lawrence, John et al**
**Barker Brettell LLP**
**100 Hagley Road**
**Edgbaston**
**Birmingham**
**B16 8QQ (GB)**

(56) References cited:
**WO-A1-99/46642** **WO-A1-03/035245**
**WO-A2-01/49817** **WO-A2-01/70385**
**DE-A1- 2 538 015** **GB-A- 2 031 366**
**GB-A- 2 037 249** **US-A- 6 030 740**

- **DATABASE WPI Week 198115 Thomson Scientific, London, GB; AN 1981-26109D XP002551120 & JP 56 015837 A (MITSUBISHI PAPER MILLS LTD) 16 February 1981 (1981-02-16)**
- **DATABASE WPI Week 198115 Thomson Scientific, London, GB; AN 1981-26107D XP002551121 & JP 56 015835 A (MITSUBISHI PAPER MILLS LTD) 16 February 1981 (1981-02-16)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

## Field of the Invention

The present invention relates to active materials that are encapsulated with a polymeric material that exhibit reduced formaldehyde levels. The encapsulated fragrance materials are well suited for rinse-off applications associated with personal care and cleaning products.

## BACKGROUND OF THE INVENTION

Fragrance chemicals are used in numerous products to enhance the consumer's enjoyment of a product. Fragrance chemicals are added to consumer products such as laundry detergents, fabric softeners, soaps, detergents, personal care products, such as shampoos, body washes, deodorants and the like, as well as numerous other products.

In order to enhance the effectiveness of the fragrance materials for the user, various technologies have been employed to enhance the delivery of the fragrance materials at the desired time. One widely used technology is encapsulation of the fragrance material in a protective coating. Frequently the protective coating is a polymeric material. The polymeric material is used to protect the fragrance material from evaporation, reaction, oxidation or otherwise dissipating prior to use. A brief overview of polymeric encapsulated fragrance materials is disclosed in the following U.S. Patents: U.S. Patent No. 4,081,384 discloses a softener or anti-stat core coated by a polycondensate suitable for use in a fabric conditioner; U.S. Patent No. 5,112,688 discloses selected fragrance materials having the proper volatility to be coated by coacervation with micro particles in a wall that can be activated for use in fabric conditioning; U.S. Patent No. 5,145,842 discloses a solid core of a fatty alcohol, ester, or other solid plus a fragrance coated by an aminoplast shell; and U.S. Patent No. 6,248,703 discloses various agents including fragrance in an aminoplast shell that is included in an extruded bar soap.

Fragrance microcapsule slurries consist of a fragrance core surrounded by a crosslinked polymeric wall, dispersed in an aqueous medium. The wall often is made up of natural or synthetically derived homopolymers or copolymers containing amide, amine, carboxyl, hydroxyl, thiol and mercaptan functional groups. These polymers are crosslinked with aminoplast type crosslinkers. These crosslinkers are based on melamine-formaldehyde, urea-formaldehyde, glycouril-formaldehyde, benzoguanamine-formaldehyde, ethyleneurea-formaldehyde, dihydroxyethyleneurea-formaldehyde, and hydroxyl (alkoxy) alkyleneurea type chemistries. A byproduct of the crosslinking reaction is formaldehyde, which remains dissolved in the slurry medium (water). The slurry is used "as is" without any attempt to purify it. Thus, the formaldehyde produced in the reaction contributes to the formaldehyde level of the slurry. In addition, formaldehyde is used in the manufacturing process of the crosslinkers which also typically do not undergo any purification. Thus this level also contributes to the final levels of the slurry.

Formaldehyde is a colorless gas that readily dissolves in water. Aqueous solutions of formaldehyde have strong, unpleasant odors. Formaldehyde is considered an industrial pollutant and has been shown to be carcinogenic based on laboratory tests. It is also a skin irritant and sensitizer. It is often necessary to reduce the formaldehyde levels in the fragrance microcapsule slurries for manufacturing and end-use benefits.

There are several approaches that can reduce the levels of free formaldehyde in fragrance microcapsules. The first approach is to remove the existing free formaldehyde from the slurry. This can be done in several ways. One way is to spray-dry the capsules so that the formaldehyde is evaporated. This would result in a dry product instead of slurry, which may or may not be desirable, depending on the application. Free formaldehyde can also be stripped by sparging with an inert gas or steam. A final way is to oxidize or derivatize (scavenge) the free formaldehyde, rendering it inactive. This can be followed by removal of the derivative by evaporation or adsorption.

All of these methods address the existing formaldehyde levels but are ineffective at reducing the future levels of formaldehyde that can increase upon aging. It has been observed that upon standing, the free formaldehyde levels may gradually increase, presumably due to residual curing or functional group hydrolysis that is taking place. This phenomena is often most readily observed in product formulations, i.e. after the capsule slurry has been added to a final product formulation. Thus it is desirable to have a system in place that also reduces or eliminates this "future" free formaldehyde. This can be accomplished by scavenging.

By adding excess levels of a scavenger to the slurry the existing free formaldehyde can be reduced and free formaldehyde that is subsequently generated can also be reduced as well. Scavengers bond with the free formaldehyde resulting in a benign complex. Scavengers that have been reported for the microencapsulation purpose include ammonium chloride, ammonium hydroxide and urea. The ammonia-based scavengers may impart an undesirable ammonia odor to the slurries. The urea-based scavengers are inefficient, requiring the addition of a large molar excess for effective scavenging. In addition, the scavenging reaction only occurs at certain temperatures and pH's. If these conditions cannot be met under the conditions of slurry or product storage then the scavengers are ineffective. Under other conditions the scavenging reactions are reversible, resulting in the generation of additional formaldehyde. Furthermore, traces of free

formaldehyde generated over time from unreacted crosslinkers in the aging slurry are not scavenged because scavenging conditions are no longer favorable.

Furthermore, the formaldehyde reducers known in the art, although they do work to reduce levels of formaldehyde they are not as effective when added to product bases of low or high pH. The scavenger-formaldehyde adducts that are formed are unstable under low pH conditions in such products as rinse conditioners, and roll-on antiperspirants. As such, formaldehyde is being released due to hydrolysis of these adducts over time.

WO03/035245 discloses a process for the preparation of microcapsules consisting essentially of a wall material and a core material in condensing a melamine-formaldehyde precondensate and/or methyl ethers thereof in an aqueous dispersion of a water-insoluble core material and in the presence of an acrylic acid/acrylamide copolymer at acidic pH and at a temperature in the range of from 20 °C to 100 °C, and hardening thereafter the melamine-formaldehyde precondensate to form the walls of the microcapsules at an elevated temperature, wherein the core material is dispersed in the precondensate/copolymer solution without initial partial condensation of the precondensate and copolymer and wherein the hydrophobe point of the precondensate and/or its methyl esters is less than 90 °C, as well as microcapsules, paper and pressure-sensitive recording material comprising such microcapsules.

Thus, there is a need in the art to provide a formaldehyde reducer whose adducts or products formed are stable to hydrolysis at low and high pH such that free formaldehyde concentrations remain low in the final consumer product during the shelf life.

Heretofore, the prior art has not disclosed a free formaldehyde reducer whose adduct or reaction product is stable to hydrolysis in the final consumer product.

## Summary of the Invention

The invention provides a process for preparing a microcapsule product with reduced levels of formaldehyde according to claim 1.

In another embodiment of the invention the scavenger may be provided either before, during or after curing.

In another embodiment a combination of scavengers can be selected to minimize formaldehyde levels while maintaining capsule performance.

In another embodiment, the formaldehyde scavengers can be immobilized on insoluble solid supports.

In yet another embodiment, polymeric scavengers containing scavenging moieties can be used to reduce formaldehyde levels.

In yet another embodiment of the invention the formaldehyde scavenger can be used with microcapsules that are cured at temperatures greater than 90°C.

In another embodiment of the invention the microcapsule product prepared according to the present invention may be added to a consumer product.

In a further embodiment of the present invention the formaldehyde scavenger may be directly provided to consumer product containing the microcapsules comprising formaldehyde.

In yet a further embodiment of the invention the levels of formaldehyde are reduced to levels less than about 1000ppm, more preferably less than about 500ppm, even more preferably less than about 250 ppm and most preferably less than about 100ppm and lower such as less than about 10ppm.

## Detailed Description of the Invention

Several sets of formaldehyde eliminators are disclosed herein, each reacting with formaldehyde by a different mechanism. Formaldehyde eliminators are understood by this invention to include formaldehyde scavengers and reducers and these terms may be used interchangeably.

According to one embodiment, the formaldehyde scavenger can be used from effective trace amounts up to 100 times the stoichiometric amount. The stoichiometric amount is the amount of scavenger required to theoretically bind or react all the formaldehyde added in the form of an aminoplast crosslinker (bound and free formaldehyde). This amount of scavenger can be added either to the slurry or afterward to the final product formulation. For instance, an unscavenged slurry can be added to the formulation, followed by a certain amount of scavenger.

The particular quantity of formaldehyde-based crosslinker that is used to create the capsule slurry contains a percentage of free formaldehyde and bound formaldehyde. The total combined moles of free and bound formaldehyde will determine the amount of moles of scavenger that is needed to react with all the formaldehyde. To drive this reaction to completion we will have to add about a 10x molar excess of scavenger, preferably about a 5x molar excess of scavenger. By moles here is meant moles of scavenging groups. So if the scavenger molecule is multifunctional (i.e. polymeric) less moles of this molecule needs to be added. This is the maximum level of scavenger needed based on the amount of crosslinker used.

The minimum level of scavenger required is that amount that scavenges only the free formaldehyde in the

slurry. This level is determined analytically. The minimum amount of moles of scavenger required is equal to the moles of measured formaldehyde (1:1). The reason for determining this minimum level is because the process can affect the level of free formaldehyde in the final slurry. Again, if the scavenger molecule is multifunctional (i.e. polymeric) less moles of this molecule needs to be added.

In a further embodiment, the formaldehyde scavengers disclosed throughout the specification may be added directly to a consumer product. The additional scavenger may be adder from about 0.01 times up to about 100 times the molar amount of all the formaldehyde in the consumer product of The additional scavenger maintains reduced levels of formaldehyde that is subsequently generated during storage by reacting with scavenger, especially in consumer products with a pH less than 3 such as fabric softener.

In the case of multifunctional scavengers such scavenging polymers and solid supports the moles of scavenger in the above specifications is determined by the number of moles scavenging groups added via the polymer or the solid support.

According to the present invention β-dicarbonyl compounds are effective formaldehyde scavengers. The β-dicarbonyl compounds of the present invention have an acidic hydrogen giving rise to a nucleophilic atom that can react with formaldehyde. The β -dicarbonyl compounds contemplated by the present invention are represented by the following structures:

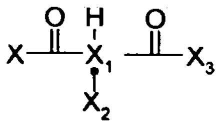

Structure 1a

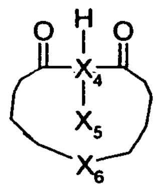

Structure 1b

wherein X, $X_3$ and $X_6$ may be selected from the group consisting of H;

(1) a C1-22 straight chain, branched or cyclic hydrocarbon or an aromatic moiety selected from phenyl, phenylene, naphthalene or other polyaromatic hydrocarbons, followed by a polar group or 1-3 halogens. The X, $X_3$ and $X_6$ groups may be chemically linked to form cyclic or heterocyclic structures;
(2) a halogen on its own;
(3) a polar group followed by H or a C1-22 straight chain, branched or cyclic hydrocarbon or an aromatic moiety selected from phenyl, phenylene, naphthalene or other polyaromatic hydrocarbon; and
(4) a polar group on its own.

The halogen described in the options above may be selected from F, Cl, Br and I.

The polar group described in the options above may be selected from O, OH, COOH, carbonyl, amide, amine, thiol, quaternary nitrogen ethoxy or propoxy group, or combinations thereof;
and wherein $X_1$ and $X_4$ is either C, N, S, or P;
and wherein $X_2$ and $X_5$ may be selected from the group consisting of H;

(1) a C1-22 straight chain, branched or cyclic hydrocarbon or aromatic moiety selected from phenyl, phenylene, naphthalene or other polyaromatic hydrocarbons, followed by a polar group or about 1 to about 3 halogens;
(2) a halogen on its own;
(3) a polar group followed by H or a C1-22 straight chain, branched or cyclic hydrocarbon or an aromatic moiety selected from phenyl, phenylene, naphthalene or other polyaromatic hydrocarbon; and
(4) a polar group on its own.

The halogen described in the options above may be selected from F, Cl, Br and I.

The polar group described in the options above may be selected from O, OH, COOH, carbonyl, amide, amine, thiol, quaternary nitrogen ethoxy or propoxy group and combinations thereof.

The β-dicarbonyl scavengers react with formaldehyde by the following reaction scheme:

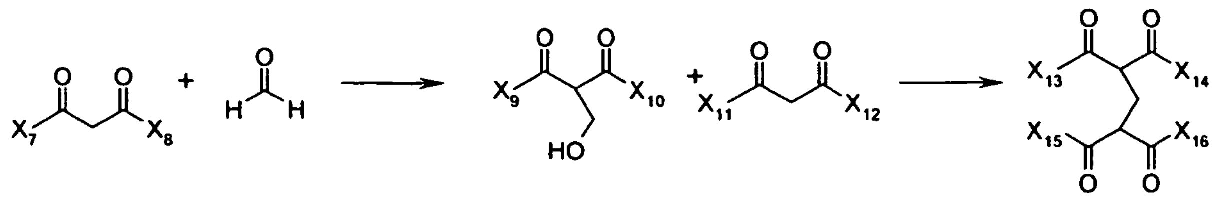

$X_{7-16}$may be independently selected from the group consisting of H;

(1) a C1-22 straight chain, branched or cyclic hydrocarbon or aromatic moiety selected from phenyl, phenylene, naphthalene and other polyaromatic hydrocarbons, followed by a polar group and about 1 to about 3 halogens;
(2) a halogen on its own;
(3) a polar group followed by H or a C1-22 straight chain, branched or cyclic hydrocarbon or an aromatic moiety selected from phenyl, phenylene, naphthalene or other polyaromatic hydrocarbon; and
(4) a polar group on its own.

The halogen described in the options above may be selected from F, Cl, Br and I.
The polar group described in the options above may be selected from O, OH, COOH, carbonyl, amide, amine, thiol, quaternary nitrogen ethoxy or propoxy group and combinations thereof.
Initially one equivalent of scavenger reacts with one equivalent of formaldehyde resulting in a methylol compound. Another equivalent of scavenger reacts with the methylol carbon forming the stable, disubstituted adduct.
The preferred β-dicarbonyl compounds are acetoacetamide (BKB (Eastman)), ethyl acetoacetate (EAA (Eastman)), N,N-Dimethyleneacetamide (DMAA (Eastman)), acetoacetone, dimethyl-1,3-acetonedicarboxylate, 1,3-acetonedicarboxylic acid, malonic acid, resorcinol, 1,3-cyclohexadione, barbituric acid, 5,5-dimethyl-1,3-cyclohexanedione (dimedone), 2,2-dimethyl-1,3-dioxane-4,6-dione (Meldrum's acid), salicylic acid, methyl acetoacetate (MAA (Eastman)), ethyl-2-methyl acetoacetate, 3-methyl-acetoacetone, dimethyl malonate, diethyl malonate, 1,3-dimethyl barbituric acid, resorcinol, phloroglucinol, orcinol, 2,4-dihydroxy benzoic acid, 3,5- dihydroxy benzoic acid, malonamide and β-dicarbonyl scavenger listed in U.S. 5,194,674 and 5,446,195 as well as in Tomasino et al, Textile Chemist and Colorist, vol. 16, No. 12 (1984).
Mono or Di-Amide scavengers may also be used as effective formaldehyde reducers. The di-amide scavengers are represented by the following structure:

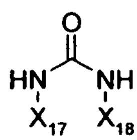

Structure 2

wherein $X_{17}$ and $X_{18}$ may be independently selected from the group consisting of H;

(1) a C1-22 straight chain, branched or cyclic hydrocarbon or aromatic moiety selected from phenyl, phenylene, naphthalene or other polyaromatic hydrocarbons, followed by a polar group or 1-3 halogens;
(2) a halogen on its own;
(3) a polar group followed by H or a C1-22 hydrocarbon (straight chain, branched or cyclic) or an aromatic moiety (phenyl, phenylene, naphthalene or other polyaromatic hydrocarbon); and
(4) a polar group on its own.

The halogen described in the options above may be selected from F, Cl, Br and I.
According to the present invention, di-amide scavengers react with formaldehyde through the nitrogen and form the following adducts as represented in the below reaction scheme:

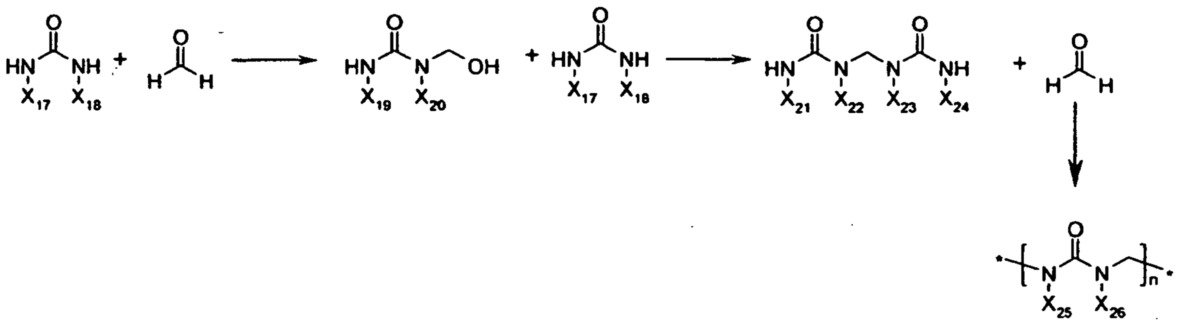

wherein $X_{17-26}$ may be independently selected from the group consisting of H;

(1) a C1-22 straight chain, branched or cyclic hydrocarbon or aromatic moiety selected from phenyl, phenylene, naphthalene or other polyaromatic hydrocarbons, followed by a polar group or 1-3 halogens;
(2) a halogen on its own;
(3) a polar group followed by H or a C1-22 straight chain, branched or cyclic hydrocarbon or aromatic moiety selected from phenyl, phenylene, naphthalene or other polyaromatic hydrocarbons; and
(4) a polar group.
The halogen described in the options above may be selected from F, Cl, Br and I.

The initial mechanism is similar to the β-dicarbonyl compounds described above. Depending on the functionality of the urea either a disubstituted or polymeric adduct is formed. Examples of the preferred effective mono- and di-amide scavengers are urea, ethylene urea, propylene urea, ε-caprolactam, glycouril, hydantoin, 2-oxazolidinone, 2-pyrrolidinone, uracil, barbituric acid, thymine, uric acid, allantoin, polyamides, 4,5-dihydroxyethylene urea, monomethylol-4-hydroxy-4-methoxy-5,5-dimethyl-propylurea, nylon 2-hydroxyethyl ethylene urea (SR-511; SR-512 (Sartomer)), 2-hydroxyethyl urea (Hydrovance (National Starch)), L-citrulline, biotin, N-methyl urea, N-ethyl urea, N-butyl urea, N-phenyl urea, 4,5-dimethoxy ethylene urea and succinimide.

Another class of compounds that are effective formaldehyde scavengers are amines which form imines by reaction with formaldehyde as represented by the following reaction schemes:

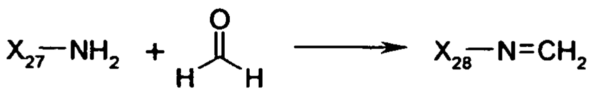

and

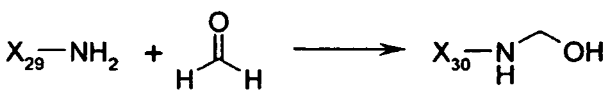

wherein $X_{27-30}$ may be independently selected from the group consisting of H;

(1) a C1-22 straight chain, branched or cyclic hydrocarbon or aromatic moiety selected from phenyl, phenylene, naphthalene or other polyaromatic hydrocarbon followed by a polar group or about 1 to about 3 halogens;
(2) a halogen on its own;
(3) a polar group followed by H or a C1-22 straight chain, branched or cyclic hydrocarbon or an aromatic moiety selected from phenyl, phenylene, naphthalene and other polyaromatic hydrocarbon; and
(4) a polar group on its own.

The halogen described in the options above may be selected from F, Cl, Br and I.

Depending upon the amine, similar but different products may be obtained.

Preferred amines contemplated by this invention include, but are not limited to, poly(vinyl amine) (Lupamin

(BASF)), arginine, lysine, asparagines, proline, tryptophan, 2-amino-2-methyl-1-propanol (AMP); proteins such as casein, gelatin, collagen, whey protein, soy protein, and albumin; melamine, benzoguanamine, 4-aminobenzoic acid (PABA), 3-aminobenzoic acid, 2-aminobenzoic acid (anthranilic acid), 2-aminophenol, 3-aminophenol, 4-aminophenol, creatine, 4-aminosalicylic acid, 5-aminosalicylic acid, methyl anthranilate, methoxylamine HCl, anthranilamide, 4-aminobenzamide, p-toluidine, p-anisidine, sulfanilic acid, sulfanilamide, methyl-4-aminobenzoate, ethyl-4-aminobenzoate (benzocain), beta-diethylaminoethyl-4-aminobenzoate (procain), 4-aminobenzamide, 3,5-diaminobenzoic acid and 2,4-diaminophenol. Other amines as disclosed in copending U.S. Letters for Patent Application Number 11/123,898 and U.S. 6,261,483, and those mentioned in Tomasino et al, Textile Chemist and Colorist, vol. 16, No. 12 (1984), are also contemplated by the present invention. Hydrazines such as 2,4-dinitrophenzylhydrazine can also react with formaldehyde by the first method to give hydrazones. The reaction is pH-dependent and reversible. Other preferred amines can be selected from a non-limiting list of 1,2-phenylenediamine, 1,3-phenylenediamine, and 1,4-phenylenediamine. In addition, aromatic amines, triamines, and aliphatic polyamine may also be used. Examples of these amines may include, but are not limited to, aniline,hexamethylenediamine, bis-hexamethylenetriamine, triethylaminetriamine, poly(propyleneoxide) triamine, and poly(propyleneglycol)diamines.

Another class of formaldehyde reducers provided by the present invention is acetal forming compounds such as those represented by the following structure:

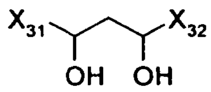

Structure 3

wherein $X_{31}$ and $X_{32}$ may be independently selected from the group consisting of H;

(1) a C1-22 straight chain, branched or cyclic hydrocarbon or aromatic moiety selected from phenyl, phenylene, naphthalene or other polyaromatic hydrocarbons, followed by a polar group or 1-3 halogens;
(2) a halogen on its own;
(3) a polar group followed by H or a C1-22 straight chain, branched or cyclic hydrocarbon or aromatic moiety selected from phenyl, phenylene, naphthalene or other polyaromatic hydrocarbons; and
(4) a polar group on its own. The halogen described in the options above may be selected from F, Cl, Br, or I.

Preferred acetal forming compounds include, but are not limited to, diethylene glycol, saccharides such as D-sorbitol and sucrose, tannins/tannic acid, and polysaccharides such as starches, guar, xanthan, pectin, chemically-modified cellulose, chitosan, absorbic acid, dextrose and mixtures thereof. Also suitable are aliphatic alcohols listed in Tomasino et al, Textile Chemist and Colorist, vol. 16, No. 12 (1984). Furthermore, polymers with alcohol functional groups such as polyvinylalcohol may be selected.

The acetal forming complex reacts with formaldehyde according to the following general reaction scheme:

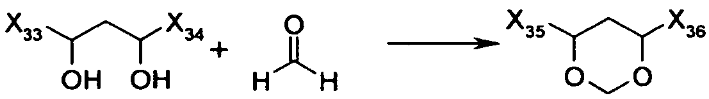

wherein $X_{33-36}$ may be independently selected from the group consisting of H;

(1)a C1-22 straight chain, branched or cyclic hydrocarbon or aromatic moiety selected from phenyl, phenylene, naphthalene or other polyaromatic hydrocarbons, followed by a polar group or 1-3 halogens;
(2) a halogen on its own;
(3) a polar group followed by H or a C1-22 straight chain, branched or cyclic hydrocarbon or an aromatic moiety selected from phenyl, phenylene, naphthalene and other polyaromatic hydrocarbon; and
(4) a polar group on its own.

The halogen described in the options above may be selected from F, Cl, Br and I.

Similar to the amines described above the reaction is pH-dependent and reversible.

Sulfur containing compounds are also capable of reacting with and scavenging formaldehyde. There are two

modes of reaction. The first reaction is with a bisulfite:

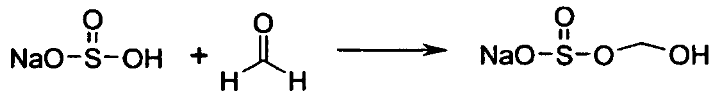

In this case the formaldehyde reacts with the sulfur-bound oxygen forming a stable addition compound. Preferred sulfur contaiing compounds are, but not limited to, 1,3,5-triazine-2,4,6-trithiol (TAICROS TMT; TMT 15 (DeGussa))and glutathione.

The other mode of reaction is similar to the acetal mechanism above, with the sulfur groups taking the place of the oxygens.

A unique case is with the amino acid cysteine which has vicinal sulfur and nitrogen groups and illustrated in the following reaction scheme:

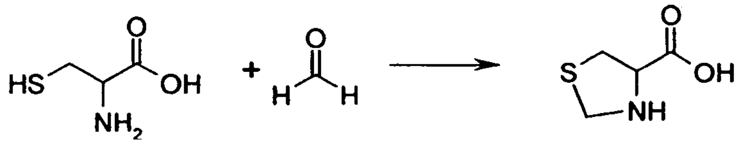

Cysteine forms a stable complex with formaldehyde. Proteins containing cysteine can also participate in this reaction.

**Scavengers Immobilized on Solid Supports**

According to one embodiment of the invention, scavenger moieties can be attached to the surfaces of solid supports. Solid supports are defined as substances that are insoluble in the capsule slurry, the product base containing the capsule slurry and the product base in use. The solid support scavengers can be added to the capsule slurry or a commercial product containing capsules to reduce formaldehyde levels. The formaldehyde becomes permanently bound to the solid support and results in an adduct that is inert and benign.

Suitable solid supports can be polymeric or inorganic in nature. Examples of polymeric supports are polyolefins such as polyethylene, polystyrene, polyvinylacetate, polysaccharides such as dextran, poly esters, polyamides, polyurethanes, polyacrylates and polyureas. The polymers can be straightchained, branched or crosslinked. The surfaces of the supports can be further treated to allow the attachment the scavenger moieties. An example of such treatment is the oxidation by plasma.

Examples of inorganic supports are clays, alumina, silica, zeolite and titanium dioxide. The supports can range in size from sub-micron to millimeter dimension. Bound scavenger moieties that are effective are aromatic amines, thiol, thiourea, urea and beta-dicarbonyls. The scavengers can exist bound directly to the support or bound to a linker molecule that is then bound directly to the support. A commercial example of a thiol functional resin is Amberlite/Duolite GT-73 (Rohm & Haas). Commercial examples of thiourea functional resins are Lewatit MonoPlus TP-214 (Lanxess) and Ionac SR-3 (Lanxess). Beta-dicarbonyl, aromatic amine and thiol functional resins are sold by Sigma-Aldrich.

**Polymeric scavengers**

In another embodiment of the invention, polymeric scavengers can be added to the capsule slurry or the product base to scavenge formaldehyde. Polymeric scavengers are defined as macromolecular species that contain scavenging moieties. Additionally, polymeric scavengers are soluble in the capsule slurry, the product base containing the capsule slurry and the product base in use. Scavenger moieties can be attached to the polymeric backbones as either endgroups or pendant groups. Alternatively, the polymer backbone can contain scavenging moieties. The advantage of a polymeric scavenger is that the scavenger and the scavenger-formaldehyde adduct are macromolecular and therefore typically more inert and benign.

Suitable polymer backbones which may be modified with scavenging endgroups are based on vinyl, acrylic, olefin, saccharide, alkylene-oxide, amine, urea, urethane, carbonate, ester, and amide/petide chemistries. The polymer molecular weights can range in size from 100 to 10,000,000 Daltons (more preferably from 500 to 1,000,000 Daltons). The polymers can be straight-chained, branched, crosslinked and networked in structure. The scavenging moieties can be attached to either all or some of the chain-ends. End-group scavenger moieties that are effective, can be selected from, but not limited to, are amides, ureas, thiols, sulfites, aromatic amines and beta-dicarbonyls. Examples of endgroup

polymeric scavengers are poly(1,4-butanediol)-bis-(4-aminobenzoate) and poly(ethyleneglycol) diacetoacetate. Scavenging moieties can be present in the polymer from 0.1 to 100 weight percent.

There are two types of scavenging pendant groups. One type is where the existing pendant has inherent scavenging ability. This would be when the pendant is terminated with an N, O, or S moiety. Suitable polymer backbones are those based on vinyl amine, vinyl alcohol, vinyl mercaptan and allylamine. Other pendant scavenger moieties that are effective are, but not limited to, aromatic amines, ureas, thiols and beta-dicarbonyls. The polymer molecular weights can range in size from 100 to 10,000,000 Daltons and more preferably from 500 to 1,000,000 Daltons. The polymers can be straight-chained, branched, or crosslinked or networked in structure. Examples of pendant polymeric scavengers are poly(vinyl amine) (Lupamin (BASF)) and poly(vinyl alcohol).

Another type of pendant scavenger group is where the existing pendant functional group is further functionalized by reaction to yield pendants with scavenging ability. In this way a polymer with pendant groups devoid of scavenging activity can be converted to an effective scavenger. Suitable polymer backbones are those based on acrylic acid, methacrylic acid, maleic anhydride, maleic acid, itaconic acid, acrylamide, vinyl amine, vinyl alcohol, vinyl mercaptan, saccharides, peptides, and allylamine. The polymer molecular weights can range in size from 100 to 10,000,00 Daltons (more preferably from 500 to 1,000,000 Daltons). The polymers can be straight-chained, branched, or crosslinked or networked in structure.

The scavenging moieties can be attached to all or some of the pendant groups. The scavengers can exist bound directly to the pendant group or bound to a linker molecule that this then bound directly to the pendant group. Suitable scavenger moieties are selected from, but not limited to, amines, amides/ureas, thiols, and beta-dicarbonyls. Those skilled in the art can determine the specific reaction pathway for attaching these scavenging moieties to the pendant groups.

In addition to the above mentioned formaldehyde reducers, formaldehyde may also be removed (i.e. elimination or absorption) to achieve partial and complete formaldehyde removal. As stated before, the formaldehyde scavenger can be used from trace amounts up to 100 times the stoichiometric amount. The stoichiometric amount is the amount of scavenger required to theoretically bind or react all the formaldehyde added in the form of an aminoplast crosslinker (bound and free formaldehyde). The material can be added either during the capsule making process, after the capsules are formed or both. Process conditions do affect the efficiency of the scavenging reaction. This pH is to be selected from about 1 to about 9, more preferably from about 2 to about 8, most preferably from about 2 to about 6.

The optimum conditions, such as pH and temperature, are highly dependent on the scavenging chemistry. Nevertheless, often more suitable pH conditions are above and below 7. In addition, higher temperature conditions may often be favorable.

The stability of capsules may be affected when scavengers are used. One way to minimize this effect is to utilize a combination of scavengers such as, but not limited to, the combination of urea and ethylene urea to maintain lower formaldehyde levels and stability. For such scavenger combinations, which may be 2 or more, each of the individual scavengers can be present at 0.1-99.9% of the total amount of scavenger added (the combination as a whole). For example, a suitable combination would be urea and ethylene urea in the ratio 1:3 to 3:1. Such combinations include the option to have a scavenger or scavenger combination used in the capsule slurry as well as a different scavenger or scavenger combination added to the final consumer product.

Another embodiment of this invention is to remove formaldehyde or formaldehyde-scavenger adducts from the capsule slurry using a solid support such as commercially available active carbon. This is surprising as formaldehyde is very water soluble. The active carbon can be washed and reused. The activated carbon can be selected from any commercial sources prepared from a wide range of processes using coal, wood and coconut. Granular activated carbon is preferred over powder samples for easy handling. Some non-limiting examples are TIGG 5D 1240, TIGG 5DR 0840, TIGG 5D 2050, TIGG 5WCS-G, and TIGG 5DAW 1240 from TIGG Corporation (Bridgeville, PA); GC 8x30, GC 8x30AW, GC 8x30S, GC 12x40SAW from General Carbon Corp., (Paterson, NJ 07501); and CAL@ 12x40, FILTRASORB® 100&200, and FILTERSOB 300&400® from Calgon Carbon (Pittsburg, PA). A more extensive list may be found in the technique brochures published by manufactures. The activated carbon can be added to the formaldehyde solution at the same time the formaldehyde-adduct is formed. It can also be added at a later stage.

In a variant of the above embodiment, formaldehyde may be removed by ammonization and the formed adducts may be subsequently adsorbed with activated carbon. According to this embodiment, formaldehyde reacts with ammonium in alkaline medium to form hemethyleneteramine which may then be adsorbed by activated carbon.

Another embodiment of invention is to remove formaldehyde from the capsule slurry by direct oxidation:

(1) to produce formic acid. Formaldehyde is removed after oxidized to formic acid with hydrogen peroxide in an alkaline base to form formic acid/salt complex.

(2) to carbon dioxide. Here, formaldehyde is oxidized to carbon dioxide by exhaustive chemical oxidation and thus removed from capsule slurry. This can be achieved by the oxidation of formaldehyde by $H_2O_2$ in acidic medium. Optionally, bleach activators and/or bleach catalysts (including oxidizing enzymes) may be used to speed up the

oxidation. Detailed options for this application are listed below.

The oxidation reaction of formaldehyde can be facilitated by using a transition metal ion such as iron (II) or iron (III) as catalyst. Redox-active transition metal ions such as Cu(I) and Mn (II) may also be used. Enzymes such peroxidase may also be utilized.

It is also possible to remove formaldehyde by chemical oxidation using manganese oxide ($MnO_2$). Formaldehyde may be oxidized by $MnO_2$ in acid medium and thus removed from capsule slurry. Other inorganic or organic oxidizer may include, but not limited to, ruthenium oxide ($RuO_2$), vanadium oxide ($V_2O_5$), sodium percarbonate, permanganate, sodium perborate. The amount of oxidizer should be enough to react stoichiometrically with the amount of formaldehyde originally present in the unscavenged slurry. That unscavenged slurry formaldehyde level depends on the formaldehyde level added to the slurry via the aminoplast crosslinker.

In order to optimize the oxidation various bleach sources may be used. These may optionally be accelerated and activated using bleach activators and catalysts (synthetic and enzymatic). The options are listed below.

**Bleach Sources**

Hydrogen peroxide (H2O2), hypochlorite, chlorine, peracids, oxygen, ozone, and chlorine dioxygen.

**$H_2O_2$ Sources**

Hydrogen peroxide sources are listed in Kirk Othmer's Encyclopedia of Chemical Technology, 4th Ed (1992, John Wiley & Sons), Vol. 4, pp. 271-300 "Bleaching Agents (Survey)". Some of the sources of hydrogen peroxide are sodium perborate, sodium percarbonate, sodium carbonate peroxyhydrate, sodium pyrophosphate peroxyhydrate, urea peroxyhydrate, or sodium peroxide can be used herein. Another useful source of available oxygen is persulfate bleach (e.g., OXONE, manufactured by DuPont).

**Bleach Activators**

These materials can activate the release of peroxide. Examples of these are: TAED (tetraacetylethylenediamine). Other activators are listed in U.S. Pat. No. 4,915,854, issued Apr. 10, 1990 to Mao et al, and U.S. Pat. No. 4,412,934. Also, nonanoyloxybenzene sulfonate (NOBS) or acyl lactam activators may be used, and mixtures thereof with TAED can also be used. Conventional bleach activators are listed in U.S. Pat No. 4,634,551. Another class of bleach activators are amido-derived bleach activators which are described in U.S. Pat. No. 4,634,551. Also, bleach activators comprising the benzoxazin-type activators disclosed by Hodge et al in U.S. Pat. No. 4,966,723, can be used. Furthermore, bleach activators of the class of acyl lactam activators such as octanoyl caprolactam, 3,5,5-trimethylhexanoyl caprolactam, nonanoyl caprolactam, decanoyl caprolactam, undecenoyl caprolactam, octanoyl valerolactam, decanoyl valerolactam, undecenoyl valerolactam, nonanoyl valerolactam, 3,5,5-trimethylhexanoyl valerolactam and mixtures thereof can be used.

Finally, quaternary substituted bleach activators may be used such as those disclosed in US patent applications 298,903, 298,650, 298,906 and 298,904.

**Bleach catalysts**

Bleach catalysts can be use to further catalyze the bleaching/oxidizing reaction. Examples of such catalysts are: transition metal cation salts and complexes with organic reagents; metal salts being manganese, cobalt, copper, iron, titanium, ruthenium, tungston, and molybdenum. Cobalt complex catalysts as disclosed in EP application 408,131. Also catalysts of lower metals can be used (disclosed in U.S. Pat. No. 4,430,243).

Manganese-based complexes disclosed in U.S. Pat. Nos. 5,246,621 and 5,244,594, EP Application 549,272, and US 5,194,416.

Complexes with other ligands such as 1,5,9-trimethyl-1,5,9-triazacyclododecane, 2-methyl-1,4,7-triazacyclononane, 2-methyl-1,4,7-triazacyclononane, and mixtures thereof.

Metal salt complex with a non-carboxylate polyhydroxy compound having at least three consecutive C--OH groups, such as those disclosed in US 5,114,606. For example, complexes of manganese (II), (III), and/or (IV) with sorbitol, iditol, dulsitol, mannitol, xylithol, arabitol, adonitol, meso-erythritol, meso-inositol, lactose, and mixtures thereof.

Bleach catalysts of the type described in US 5,114,611. Examples are bleach catalysts comprising Co, Cu, Mn, Fe, - bispyridylmethane and -bispyridylamine complexes such as Co(2,2'-bispyridylamine)$C1_2$, Di(isothiocyanato) bispyridylamine-cobalt (II), trisdipyridylamine-cobalt(II) perchlorate, Co(2,2-bispyridylamine)$_2$ $O_2$ $ClO_4$, Bis-(2,2'-bispyridylamine) copper(II) perchlorate, tris(di-2-pyridylamine) iron(II) perchlorate, and mixtures thereof.

Mn gluconate, $Mn(CF_3 SO_3)_2$, $Co(NH_3)_5 Cl$, and the binuclear Mn complexed with tetra-N-dentate and bi-N-dentate ligands, including $N_4 Mn^{III} (u\text{-}O)_2 Mn^{IV} N_4)^+$ and $[Bipy_2 Mn^{III} (u\text{-}O)_2 Mn^{IV} bipy_2]\text{-}(ClO_4)_3$.
Metallo porphyrin catalysts such as those disclosed in EP Application Nos. 384,503, and 306,089.
Absorbed catalysts onto mineral supports such as disclosed in U.S. Patent Nos. 4,601,845 and 4,711,748.
Bleach catalysts that are disclosed in U.S. Patent Nos. 4,728,455, 4,711,748, 4,626,373, 4,119,557, 4,430,243, 4,728,455 and DE Patent No. 2,054,019. Another group of bleach catalysts that may be used are the polyoxymetallates.

**Oxidizing Enzymes:**

Oxidizing enzymes such as horseradish peroxidase, haloperoxidases, amine oxidase, amino acid oxidase, cholesterol oxidase, uric acid oxidase, xanthine oxidase, glucose oxidase, galactose oxidase and alcohol oxidase may also be used to oxidize formaldehyde.
The concentration of oxidizer needed can be calculated by the concentration of formaldehyde used. The molar ratio of peroxide to formaldehyde can vary from 1 to 20, preferably 1 to 10. The amount of catalyst can be used at level where a reasonable rate is achieved. A preferably ratio will be one tenth to 1% of that of the peroxide.
It is appreciated by those skilled in the art that the formaldehyde eliminators described above may be used alone or in combination with the formaldehyde absorbers described above. The ratio formaldehyde absorber (active carbon) to slurry is determined by the level of formaldehyde present. That means that prior to formaldehyde absorption, one skilled in the art should evaluate the binding capacity of the formaldehyde absorber and make sure that the capacity for formaldehyde absorption is in excess of the amount of formaldehyde in the unscavenged capsule slurry.
Process pH and temperature conditions for employing oxidizing agents depends on the type of bleach source. More moderate conditions are possible when using bleach activators and catalysts (synthetic or enzymes).
In another embodiment of the invention, the formaldehyde scavengers disclosed herein can be used in a process to increase the stability of a microcapsule product by curing the microcapsules at higher temperatures. The retention capabilities of the microcapsule product are improved when the crosslinked network of polymers containing active materials are cured at temperatures above 110°C. In a most preferred embodiment the retention capabilities of the microcapsule product are improved when the cure temperature is above 120°C. In a further embodiment the crosslinked network of polymers containing active materials may be cured for periods of time longer than 1 hour and more preferably longer than two hours.
The term high stability refers to the ability of a microcapsule product to retain active materials in bases that have a tendency to promote leaching of the active material out of the microcapsule product into the base. For example, there exists a relationship between higher concentration of surfactants in the base of consumer products and an increased leaching effect of the encapsulated active materials out of the microcapsules and into the base. Bases that are primarily non-aqueous in nature, e.g., those that are based on alcohols, or volatile silicones can also leach active materials from capsules over time. Volatile silicones such as but not limited to Cyclomethicone and are exemplified by SF1256 Cyclopentasiloxane, SF1257 Cyclopentasiloxane are trademarks of General Electric Company. Volatile silicones are in a number of personal care products, such as antiperspirants, deodorants, hair sprays, cleansing creams, skin creams, lotions and stick products, bath oils, suntan and shaving product, make-up and nail polishes. In these product types, the base solvent itself solubilizes the active material.

**Encapsulated Active Materials**

The active material is a fragrance, in which case the microcapsules containing fragrance provide a controlled-release scent onto the surface being treated or into the environment surrounding the surface. In this case, the fragrance can be comprised of a number of fragrance raw materials known in the art, such as essential oils, botanical extracts, synthetic fragrance materials, and the like.
The level of fragrance in the cationic polymer coated encapsulated fragrance varies from about 5 to about 95 weight percent, preferably from about 40 to about 95 and most preferably from about 50 to about 90 weight percent on a dry basis. In addition to the fragrance other agents can be used in conjunction with the fragrance and are understood to be included.
As noted above, the fragrance may also be combined with a variety of solvents which serve to increase the compatibility of the various materials, increase the overall hydrophobicity of the blend, influence the vapor pressure of the materials, or serve to structure the blend. Solvents performing these functions are well known in the art and include mineral oils, triglyceride oils, silicone oils, fats, waxes, fatty alcohols, diisodecyl adipate, and diethyl phthalate among others.
As described herein, the present invention is well suited for use in a variety of well-known consumer products such as laundry detergent and fabric softeners, liquid dish detergents, automatic dish detergents, as well as hair shampoos and conditioners. These products employ surfactant and emulsifying systems that are well known. For example, fabric

softener systems are described in U.S. Patents 6,335,315, 5,674,832, 5,759,990, 5,877,145, 5,574,179; 5,562,849, 5,545,350, 5,545,340, 5,411,671, 5,403,499, 5,288,417, and 4,767,547, 4,424,134. Liquid dish detergents are described in U.S. Patents 6,069,122 and 5,990,065; automatic dish detergent products are described in U.S. Patents 6,020,294, 6,017,871, 5,968,881, 5,962,386, 5,939,373, 5,914,307, 5,902,781, 5,705,464, 5,703,034, 5,703,030, 5,679,630, 5,597,936, 5,581,005, 5,559,261, 4,515,705, 5,169,552, and 4,714,562. Liquid laundry detergents which can use the present invention include those systems described in U.S. Patents 5,929,022, 5,916,862, 5,731,278, 5,565,145, 5,470,507, 5,466,802, 5,460,752, 5,458,810, 5,458,809, 5,288,431,5,194,639, 4,968,451, 4,597,898, 4,561,998, 4,550,862, 4,537,707, 4,537,706, 4,515,705, 4,446,042, and 4,318,818. Shampoo and conditioners that can employ the present invention include those described in U.S. Patents 6,162,423, 5,968,286, 5,935,561, 5,932,203, 5,837,661, 5,776,443, 5,756,436, 5,661,118, 5,618,523, 5,275,755, 5,085,857, 4,673,568, 4,387,090 and 4,705,681. All of the above mentioned U.S. Patents.

**Capsule Technology**

Encapsulation of active materials such as fragrances is known in the art, see for example U.S. Patent Nos. 2,800,457, 3,870,542, 3,516,941, 3,415,758, 3,041,288, 5,112,688, 6,329,057, and 6,261,483.

Another discussion of fragrance encapsulation is found in the Kirk-Othmer Encyclopedia.

Preferred encapsulating polymers are melamine-formaldehyde condensates.

Fragrance capsules known in the art consists of a core of various ratios of fragrance and solvent materials, a wall or shell comprising a three-dimensional cross-linked network of an aminoplast resin, more specifically a substituted or un-substituted acrylic acid polymer or co-polymer cross-linked with a urea-formaldehyde pre-condensate or a melamine-formaldehyde pre-condensate.

The cross-linkable acrylic acid polymer or co-polymer microcapsule shell wall precursor has a plurality of carboxylic acid moieties, to wit:

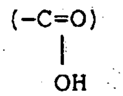

and is preferably one or a blend of the following:

(i) an acrylic acid polymer;
(ii) a methacrylic acid polymer;
(iii) an acrylic acid-methacrylic acid co-polymer;
(iv) an acrylamide-acrylic acid co-polymer;
(v) a methacrylamide-acrylic acid co-polymer;
(vi) an acrylamide-methacrylic acid co-polymer;
(vii) a methacrylamide-methacrylic acid co-polymer;
(viii) a $C_1$-$C_4$ alkyl acrylate-acrylic acid co-polymer;
(ix) a $C_1$-$C_4$ alkyl acrylate-methacrylic acid co-polymer;
(x) a $C_1$-$C_4$ alkyl methacrylate-acrylic acid co-polymer;
(xi) a $C_1$-$C_4$ alkyl methacrylate-methacrylic acid co-polymer;
(xii) a $C_1$-$C_4$ alkyl acrylate-acrylic acid-acrylamide co-polymer;
(xiii) a $C_1$-$C_4$ alkyl acrylate-methacrylic acid-acrylamide copolymer;
(xiv) a $C_1$-$C_4$ alkyl methacrylate-acrylic acid-acrylamide copolymer;
(xv) a $C_1$-$C_4$ alkyl methacrylate-methacrylic acid-acrylamide copolymer;
(xvi) a $C_1$-$C_4$ alkyl acrylate-acrylic acid-methacrylamide copolymer;
(xvii) a $C_1$-$C_4$ alkyl acrylate-methacrylic acid-methacrylamide co-polymer;
(xviii) a $C_1$-$C_4$ alkyl methacrylate-acrylic acid-methacrylamide co-polymer; and
(xix) a $C_1$-$C_4$ alkyl methacrylate-methacrylic acid-methacrylamide co-polymer;
and more preferably, an acrylic acid-acrylamide copolymer.

When substituted or un-substituted acrylic acid co-polymers are employed in the practice of our invention, in the case of using a co-polymer having two different monomeric units, e.g. acrylamide monomeric units and acrylic acid monomeric units, the mole ratio of the first monomeric unit to the second monomeric unit is in the range of from about 1:9 to about 9:1, preferably from about 3:7 to about 7:3. In the case of using a co-polymer having three different monomeric units, e.g. ethyl methacrylate, acrylic acid and acrylamide, the mole ratio of the first monomeric unit to the second

monomeric unit to the third monomeric unit is in the range of 1:1:8 to about 8:8:1, preferably from about 3:3:7 to about 7:7:3.

The molecular weight range of the substituted or unsubstituted acrylic acid polymers or co-polymers useful in the practice of our invention is from about 5,000 to about 1,000,000, preferably from about 10,000 to about 100,000. The substituted or un-substituted acrylic acid polymers or co-polymers useful in the practice of our invention may be branched, linear, star-shaped, dendritic-shaped or may be a block polymer or copolymer, or blends of any of the aforementioned polymers or copolymers.

Such substituted or un-substituted acrylic acid polymers or co-polymers may be prepared according to any processes known to those skilled in the art, for example, U.S. Patent 6,545,084.

The melamine-formaldehyde pre-condensate microcapsule shell wall precursors are prepared by means of reacting melamine with formaldehyde where the mole ratio of melamine to formaldehyde is in the range of from about 10:1 to about 1:6, preferably from about 1:2 to about 1:5 . For purposes of practicing our invention, the resulting material has a molecular weight in the range of from 156 to 3000. The resulting material may be used 'as-is' as a cross - linking agent for the aforementioned substituted or un-substituted acrylic acid polymer or copolymer or it may be further reacted with a $C_1$-$C_6$ alkanol, e.g. methanol, ethanol, 2-propanol, 3-propanol, 1-butanol , 1-pentanol or 1-hexanol, thereby forming a partial ether where the mole ratio of melamine : formalhyde:alkanol is in the range of 1:(0.1 - 6):(0.1-6). The resulting ether moiety-containing product may by used 'as-is' as a cross-linking agent for the aforementioned substituted or un-substituted acrylic acid polymer or copolymer, or it may be self-condensed to form dimers, trimers and/or tetramers which may also be used as cross-linking agents for the aforementioned substituted or un-substituted acrylic acid polymers or copolymers. Methods for formation of such melamine-formaldehyde pre-condensates are set forth in U.S. Patent 3,516,846, U.S. Patent 6,261,483, and Lee et al. J. Microencapsulation, 2002, Vol. 19, No. 5, pp 559-569, "Microencapsulation of fragrant oil via in situ polymerization: effects of pH and melamine-formaldehyde molar ratio". Examples of urea-formaldehyde pre-condensates useful in the practice of our invention are URAC 180 and URAC 186, trademarks of Cytec Technology Corp. of Wilmington, Delaware 19801, U.S.A. Examples of melamine-formaldehyde pre-condensates useful in the practice of our invention are CYMEL U-60, CYMEL U-64 and CYMEL U-65, trademarks of Cytec Technology Corp. of Wilmington, Delaware 19801, U.S.A. In the practice of our invention it is preferable to use as the precondensate for cross-linking the substituted or un-substituted acrylic acid polymer or co-polymer. The melamine-formaldehyde pre-condensate having the structure:

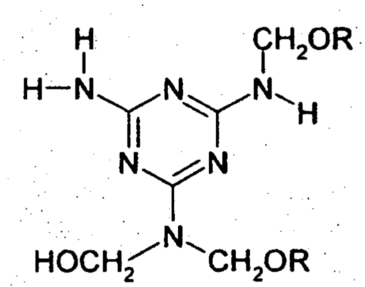

wherein each of the R groups are the same or different and each represents hydrogen or $C_1$-$C_6$ lower alkyl, e.g. methyl, ethyl, 1-propyl, 2-propyl, 1-butyl, 2-butyl, 2-methyl-1-propyl, 1-pentyl, 1-hexyl and/or 3-methyl-1-pentyl.

In practicing our invention, the range of mole ratios of melamine-formaldehyde pre-condensate: substituted or un-substituted acrylic acid polymer or co-polymer is in the range of from about 9:1 to about 1:9, preferably from about 5:1 to about 1:5 and most preferably from about 2:1 to about 1:2.

Once the fragrance material is encapsulated a cationically charged water-soluble polymer may optionally be applied to the fragrance encapsulated polymer. This water-soluble polymer can also be an amphoteric polymer with a ratio of cationic and anionic functionalities resulting in a net total charge of zero and positive, i.e., cationic. Those skilled in the art would appreciate that the charge of these polymers can be adjusted by changing the pH, depending on the product in which this technology is to be used. Any suitable method for coating the cationically charged materials onto the encapsulated fragrance materials can be used. The nature of suitable cationically charged polymers for assisted capsule delivery to interfaces depends on the compatibility with the capsule wall chemistry since there has to be some association to the capsule wall. This association can be through physical interactions, such as hydrogen bonding, ionic interactions, hydrophobic interactions, electron transfer interactions or, alternatively, the polymer coating could be chemically (covalently) grafted to the capsule or particle surface. Chemical modification of the capsule or particle surface is another way to optimize anchoring of the polymer coating to capsule or particle surface. Furthermore, the capsule and the polymer need to want to go to the desired interface and, therefore, need to be compatible with the chemistry (polarity, for instance) of that interface. Therefore, depending on which capsule chemistry and interface (e.g., cotton, polyester, hair, skin, wool) is used the cationic polymer can be selected from one or more polymers with an overall zero (amphoteric:

mixture of cationic and anionic functional groups) or net positive charge, based on the following polymer backbones: polysaccharides, polypeptides, polycarbonates, polyesters, polyolefinic (vinyl, acrylic, acrylamide, poly diene), polyester, polyether, polyurethane, polyoxazoline, polyamine, silicone, polyphosphazine, olyaromatic, poly heterocyclic, or polyionene, with molecular weight (MW) ranging from about 1,000 to about 1000,000,000, preferably from about 5,000 to about 10,000,000. As used herein molecular weight is provided as weight average molecular weight. Optionally, these cationic polymers can be used in combination with nonionic and anionic polymers and surfactants, possibly through coacervate formation.

A more detailed list of cationic polymers that can be used to coat the encapsulated fragrance is provided below: Polysaccharides include but are not limited to guar, alginates, starch, xanthan, chitosan, cellulose, dextrans, arabic gum, carrageenan, hyaluronates. These polysaccharides can be employed with:

(a) cationic modification and alkoxy-cationic modifications, such as cationic hydroxyethyl, cationic hydroxy propyl. For example, cationic reagents of choice are 3-chloro-2-hydroxypropyl trimethylammonium chloride or its epoxy version. Another example is graft-copolymers of polyDADMAC on cellulose like in Celquat L-200 (Polyquaternium-4), Polyquaternium-10 and Polyquaternium-24, commercially available from National Starch, Bridgewater, N.J.;
(b) aldehyde, carboxyl, succinate, acetate, alkyl, amide, sulfonate, ethoxy, propoxy, butoxy, and combinations of these functionalities. Any combination of Amylose and Mylopectin and overall molecular weight of the polysaccharide; and
(c) any hydrophobic modification (compared to the polarity of the polysaccharide backbone).

The above modifications described in (a), (b) and (c) can be in any ratio and the degree of functionalization up to complete substitution of all functionalizable groups, and as long as the theoretical net charge of the polymer is zero (mixture of cationic and anionic functional groups) or preferably positive. Furthermore, up to 5 different types of functional groups may be attached to the polysaccharides. Also, polymer graft chains may be differently modified than the backbone. The counterions can be any halide ion or organic counter ion. U.S. Patent Nos. 6,297,203 and U.S. 6,200,554.

Another source of cationic polymers contain protonatable amine groups so that the overall net charge is zero (amphoteric: mixture of cationic and anionic functional groups) or positive. The pH during use will determine the overall net charge of the polymer. Examples are silk protein, zein, gelatin, keratin, collagen and any polypeptide, such as polylysine.

Further cationic polymers include poly vinyl polymers, with up to 5 different types of monomers, having the monomer generic formula -C(R2)(R1)-CR2R3-. Any co-monomer from the types listed in this specification may also be used. The overall polymer will have a net theoretical positive charge or equal to zero (mixture of cationic and anionic functional groups). Where R1 is any alkanes from C1-C25 or H; the number of double bonds ranges from 0-5. Furthermore, R1 can be an alkoxylated fatty alcohol with any alkoxy carbon-length, number of alkoxy groups and C1-C25 alkyl chain length. R1 can also be a liquid crystalline moiety that can render the polymer thermotropic liquid crystalline properties, or the alkanes selected can result in side-chain melting. In the above formula R2 is H or CH3; and R3 is -Cl, -NH2 (i.e., poly vinyl amine or its copolymers with N-vinyl formamide. These are sold under the name Lupamin 9095 by BASF Corporation), -NHR1, -NR1R2, -NR1R2 R6 (where R6 = R1, R2, or -CH2-COOH or its salt), -NH-C(O)-H, -C(O)-NH2 (amide), -C(O)-N(R2)(R2')(R2"), -OH, styrene sulfonate, pyridine, pyridine-N-oxide, quaternized pyridine, imidazolinium halide, imidazolium halide, imidazol, piperidine, pyrrolidone, alkyl-substituted pyrrolidone, caprolactam or pyridine, phenyl-R4 or naphthalene-R5 where R4 and R5 are R1, R2, R3, sulfonic acid or its alkali salt -COOH, -COO- alkali salt, ethoxy sulphate or any other organic counter ion. Any mixture or these R3 groups may be used. Further suitable cationic polymers containing hydroxy alkyl vinyl amine units, as disclosed in U.S. Patent No 6,057,404.

Another class of materials are polyacrylates, with up to 5 different types of monomers, having the monomer generic formula: -CH(R1)-C(R2)(CO-R3-R4)-. Any co-monomer from the types listed in this specification may also be used. The overall polymer will have a net theoretical positive charge or equal to zero (mixture of cationic and anionic functional groups). In the above formula R1 is any alkane from C1-C25 or H with number of double bonds from 0-5,aromatic moieties, polysiloxane, or mixtures thereof. Furthermore, R1 can be an alkoxylated fatty alcohol with any alkoxy carbon-length, number of alkoxy groups and C1-C25 alkyl chain length. R1 can also be a liquid crystalline moiety that can render the polymer thermotropic liquid crystalline properties, or the alkanes selected can result in side-chain melting. R2 is H or CH3; R3 is alkyl alcohol C1-25 or an alkylene oxide with any number of double bonds, or R3 may be absent such that the C=O bond is (via the C-atom) directly connected to R4. R4 can be: -NH2, NHR1, -NR1R2, -NR1R2 R6 (where R6 = R1, R2, or - CH2-COOH or its salt), -NH-C(O)-, sulfo betaine, betaine, polyethylene oxide, poly(ethyleneoxide/propylene oxide/butylene oxide) grafts with any end group, H, OH, styrene sulfonate, pyridine, quaternized pyridine, alkyl-substituted pyrrolidone or pyridine, pyridine-N-oxide, imidazolinium halide, imidazolium halide, imidazol, piperidine, -OR1, -OH, -COOH alkali salt, sulfonate, ethoxy sulphate, pyrrolidone, caprolactam, phenyl-R4 or naphthalene-R5 where R4 and R5 are R1, R2, R3, sulfonic acid or its alkali salt or organic counter ion. Any mixture or these R3 groups may be used. Also, glyoxylated cationic polyacrylamides can be used. Typical polymers of choice are those containing the

cationic monomer dimethylaminoethyl methacrylate (DMAEMA) or methacrylamidopropyl trimethyl ammonium chloride (MAPTAC). DMAEMA can be found in Gafquat and Gaffix VC-713 polymers from ISP. MAPTAC can be found in BASF's Luviquat PQ11 PN and ISP's Gafquat HS100.

Another group of polymers that can be used are those that contain cationic groups in the main chain or backbone. Included in this group are:

(1) polyalkylene imines such as polyethylene imine, commercially available as Lupasol from BASF. Any molecular weight and any degree of crosslinking of this polymer can be used in the present invention;
(2) ionenes having the general formula set forth as - [N(+)R1R2-A1-N(R5)-X-N(R6)-A2-N(+)R3R4-A3]n- 2Z-, as disclosed in U.S. Patent Nos. 4,395,541 and U.S. 4,597,962;
(3) adipic acid/dimethyl amino hydroxypropyl diethylene triamine copolymers, such as Cartaretin F-4 and F-23, commercially available from Sandoz;
(4) polymers of the general formula-[N(CH3)2-(CH2)x-NH-(CO)-NH-(CH2)y-N(CH3)2)-(CH2)z-O-(CH2)p]n-, with x, y, z, p=1-12, and n according to the molecular weight requirements. Examples are Polyquaternium 2 (Mirapol A-15), Polyquaternium-17 (Mirapol AD-1), and Polyquaternium-18 (Mirapol AZ-1).

Other polymers include cationic polysiloxanes and cationic polysiloxanes with carbon-based grafts with a net theoretical positive charge or equal to zero (mixture of cationic and anionic functional groups). This includes cationic end-group functionalized silicones (i.e. Polyquaternium-80). Silicones with general structure: -[-Si(R1)(R2)-O-]x-[Si(R3)(R2)-O-]y-where R1 is any alkane from C1-C25 or H with number of double bonds from 0-5,aromatic moieties, polysiloxane grafts, or mixtures thereof. R1 can also be a liquid crystalline moiety that can render the polymer thermotropic liquid crystalline properties, or the alkanes selected can result in side-chain melting. R2 can be H or CH3 and R3 can be -R1-R4, where R4 can be -NH2, -NHR1, -NR1R2, -NR1R2R6 (where R6 = R1, R2, or -CH2-COOH or its salt), -NH-C(O)-, -COOH, -COO- alkali salt, any C1-25 alcohol, -C(O)-NH2 (amide), -C(O)-N(R2)(R2')(R2"), sulfo betaine, betaine, polyethylene oxide, poly(ethyleneoxide/propylene oxide/butylene oxide) grafts with any end group, H, -OH, styrene sulfonate, pyridine, quaternized pyridine, alkyl-substituted pyrrolidone or pyridine, pyridine-N-oxide, imidazolinium halide, imidazolium halide, imidazol, piperidine, pyrrolidone, caprolactam, -COOH, -COO- alkali salt, sulfonate, ethoxy sulphate phenyl-R5 or naphthalene-R6 where R5 and R6 are R1, R2, R3, sulfonic acid or its alkali salt or organic counter ion. R3 can also be -(CH2)x-O-CH2-CH(OH)-CH2-N(CH3)2-CH2-COOH and its salts. Any mixture of these R3 groups can be selected. X and y can be varied as long as the theoretical net charge of the polymer is zero (amphoteric) or positive. In addition, polysiloxanes containing up to 5 different types of monomeric units may be used. Examples of suitable polysiloxanes are found in U.S. Patent Nos. 4,395,541 4,597,962 and U.S.6,200,554. Another group of polymers that can be used to improve capsule/particle deposition are phospholipids that are modified with cationic polysiloxanes. Examples of these polymers are found in U.S. Patent No. 5,849,313, WO Patent Application 9518096A1 and European Patent EP0737183B1.

Furthermore, copolymers of silicones and polysaccharides and proteins can be used (commercially available as CRODASONE brand products).

Another class of polymers include polyethylene oxide-copropyleneoxide-co-butylene oxide polymers of any ethylene oxide/propylene oxide / butylene oxide ratio with cationic groups resulting in a net theoretical positive charge or equal to zero (amphoteric). The general structure is:

```
 R3-(BuO)z"(PO)y"(EO)x" \              / (EO)x(PO)y(BuO)z-R1
                          (R5)N-(CH2)y-N(R6)
R4-(BuO)z'''(PO)y'''(EO)x'''/             \ (EO)x'(PO)y'(BuO)z'-R2
```

where R1,2,3,4 is -NH2, -N(R)3- X+, R with R being H or any alkyl group. R5,6 is -CH3 or H. Counter ions can be any halide ion or organic counter ion. X, Y, may be any integer, any distribution with an average and a standard deviation and all 12 can be different. Examples of such polymers are the commercially available TETRONIC brand polymers.

Suitable polyheterocyclic (the different molecules appearing in the backbone) polymers include the piperazine-alkylene main chain copolymers disclosed in Ind. Eng. Chem. Fundam., (1986), 25, pp.120-125, by Isamu Kashiki and Akira Suzuki.

Also suitable for use in the present invention are copolymers containing monomers with cationic charge in the primary polymer chain. Up to 5 different types of monomers may be used. Any co-monomer from the types listed in this specification may also be used. Examples of such polymers are poly diallyl dimethyl ammonium halides (PolyDADMAC)

copolymers of DADMAC with vinyl pyrrolidone, acrylamides, imidazoles, imidazolinium halides, etc. These polymers are disclosed in Henkel EP0327927A2 and PCT Patent Application 01/62376A1. Also suitable are Polyquaternium-6 (Merquat 100), Polyquaternium-7 (Merquats S, 550, and 2200), Polyquaternium-22 (Merquats 280 and 295) and Polyquaternium-39 (Merquat Plus 3330), available from Ondeo Nalco.

Polymers containing non-nitrogen cationic monomers of the general type -CH2-C(R1)(R2-R3-R4)- can be used with: R1 being a -H or C1-C20 hydrocarbon. R2 is a disubstituted benzene ring or an ester, ether, or amide linkage. R3 is a C1-C20 hydrocarbon, preferably C1-C10, more preferably C1-C4. R4 can be a trialkyl phosphonium, dialkyl sulfonium, or a benzopyrilium group, each with a halide counter ion. Alkyl groups for R4 are C1-C20 hydrocarbon, most preferably methyl and t-butyl. These monomers can be copolymerized with up to 5 different types of monomers. Any co-monomer from the types listed in this specification may also be used.

Substantivity of these polymers may be further improved through formulation with cationic, amphoteric and nonionic surfactants and emulsifiers, or by coacervate formation between surfactants and polymers or between different polymers. Combinations of polymeric systems (including those mentioned previously) may be used for this purpose as well as those disclosed in EP1995/000400185.

Furthermore, polymerization of the monomers listed above into a block, graft or star (with various arms) polymers can often increase the substantivity toward various surfaces. The monomers in the various blocks, graft and arms can be selected from the various polymer classes listed in this specification and the sources below:

Encyclopedia of Polymers and Thickeners for Cosmetics, Robert Lochhead and William From, in Cosmetics & Toiletries, Vol. 108, May 1993, pp. 95-138;

Modified Starches: Properties & Uses, O. B. Wurzburg, CRC Press, 1986. Specifically, Chapters 3, 8, and 10; U.S. Patent Nos. 6,190,678 and 6,200,554; and PCT Patent Application WO 01/62376A1 assigned to Henkel. Polymers, or mixtures of the following polymers:

(a) Polymers comprising reaction products between polyamines and (chloromethyl) oxirane or (bromomethyl) oxirane. Polyamines being 2(R1)N-[-R2-N(R1)-]n-R2-N(R1)2, 2HN-R1-NH2, 2HN-R2-N(R1)2 and 1H-Imidazole. Also, the polyamine can be melamine. R1 in the polyamine being H or methyl. R2 being alkylene groups of C1-C20 or phenylene groups. Examples of such polymers are known under the CAS numbers 67953-56-4 and 68797-57-9. The ratio of (chloromethyl) oxirane to polyamine in the cationic polymer ranges from 0.05-0.95.

(b) Polymers comprising reaction products of alkanedioic acids, polyamines and (chloromethyl) oxirane or (bromomethyl) oxirane. Alkane groups in alkanedioic acids C0-C20. Polyamine structures are as mentioned in (a). Additional reagents for the polymer are dimethyl amine, aziridine and polyalkylene oxide (of any molecular weight but, at least, di-hydroxy terminated; alkylene group being C1-20, preferably C2-4). The polyalkylene oxide polymers that can also be used are the Tetronics series. Examples of polymers mentioned here are known under the CAS numbers 68583-79-9 (additional reagent being dimethyl amine), 96387-48-3 (additional reagent being urea), and 167678-45-7 (additional reagents being polyethylene oxide and aziridine). These reagents can be used in any ratio.

(c) Polyamido Amine and Polyaminoamide-epichlorohydrin resins, as described by David Devore and Stephen Fisher in Tappi Journal, vol.76, No.8, pp. 121-128 (1993). Also referenced herein is "Polyamide-polyamine-epichlorohydrin resins" by W. W. Moyer and R. A. Stagg in Wet-Strength in Paper and Paperboard, Tappi Monograph Series No. 29, Tappi Press (1965), Ch.3, 33-37.

The preferred cationically charged materials comprise reaction products of polyamines and (chloromethyl) oxirane. In particular, reaction products of 1H-imidazole and (chloromethyl) oxirane, known under CAS number 68797-57-9. Also preferred are polymers comprising reaction products of 1,6-hexanediamine,N-(6-aminohexyl) and (chloromethyl) oxirane, known under CAS number 67953-56-4. The preferred weight ratio of the imidazole polymer and the hexanediamine, amino hexyl polymer is from about 5:95 to about 95:5 weight percent and preferably from about 25:75 to about 75:25.

The level of outer cationic polymer is from about 1% to about 3000%, preferably from about 5% to about 1000% and most preferably from about 10% to about 500% of the fragrance containing compositions, based on a ratio with the fragrance on a dry basis.

The weight ratio of the encapsulating polymer to fragrance is from about 1:25 to about 1:1. Preferred products have had the weight ratio of the encapsulating polymer to fragrance varying from about 1:10 to about 4:96.

For example, if a capsule blend has 20 weight % fragrance and 20 weight % polymer, the polymer ratio would be (20/20) multiplied by 100 (%) = 100%.

The present invention, the encapsulated fragrance is well suited for wash-off products. Wash-off products are understood to be those products that are applied for a given period of time and then are removed. These products are common in areas such as laundry products, and include detergents, fabric conditioners, and the like; as well as personal

care products which include shampoos, hair rinses, body washes, soaps and the like.

As described herein, the present invention is well suited for use in a variety of well-known consumer products such as laundry detergent and fabric softeners, liquid dish detergents, automatic dish detergents, as well as hair shampoos and conditioners. These products employ surfactant and emulsifying systems that are well known. For example, fabric softener systems are described in U.S. Patents 6,335,315, 5,674,832, 5,759,990, 5,877,145, 5,574,179, 5,562,849, 5,545,350, 5,545,340, 5,411,671, 5,403,499, 5,288,417, 4,767,547 and 4,424,134. Liquid dish detergents are described in 6,069,122 and 5,990,065; automatic dish detergent products are described in 6,020,294, 6,017,871, 5,968,881, 5,962,386, 5,939,373, 5,914,307, 5,902,781, 5,705,464, 5,703,034, 5,703,030, 5,679,630, 5,597,936, 5,581,005, 5,559,261, 4,515,705, 5,169,552, and 4,714,562. Liquid laundry detergents which can use the present invention include those systems described in 5,929,022, 5,916,862, 5,731,278, 5,565,145, 5,470,507, 5,466,802, 5,460,752, 5,458,810, 5,458,809, 5,288,431,5,194,639, 4,968,451, 4,597,898, 4,561,998, 4,550,862, 4,537,707, 4,537,706, 4,515,705, 4,446,042, and 4,318,818. Shampoo and conditioners that can employ the present invention include 6,162,423, 5,968,286, 5,935561, 5,932,203, 5,837,661, 5,776,443, 5,756,436, 5,661,118, 5,618,523, 5,275,755, 5,085,857, 4,673,568, 4,387,090, 4,705,681.

These and additional modifications and improvements of the present invention may also be apparent to those with ordinary skill in the art. The particular combinations of elements described and illustrated herein are intended only to represent only a certain embodiment of the present invention and are not intended to serve as limitations of alternative articles within the scope of the invention. All materials are reported in weight percent unless noted otherwise. As used herein all percentages are understood to be weight percent.

The ASTM (American Standards and Testing Methods) test method was used in the following Examples to determine the level of formaldehyde present in the capsule slurries. This standard is issued under the fixed designation D 5910-96.

**EXAMPLES**

The following fragrance composition was prepared for use in the following Examples:

| Fragrance Component | C $log_{10}P$ value | Molecular Weight | Parts By Weight |
|---|---|---|---|
| Veramoss | 3.22 | 196.07 | 3.0 |
| geranyl anthranilate | 4.22 | 273.38 | 7.5 |
| α-irone | 3.82 | 206.33 | 6.3 |
| Phenyl ethyl benzoate | 4.21 | 226.28 | 3.2 |
| d-limonene | 4.23 | 136.24 | 3.2 |
| Cis-p-t-butylcyclohexyl acetate | 4.02 | 198.31 | 5.8 |
| Liverscone | 2.95 | 152.12 | 7.3 |
| hexyl cinnamic aldehyde | 4.90 | 216.33 | 12.6 |
| hexyl salicylate | 4.91 | 222.29 | 10.6 |

**Comparative EXAMPLE I**

**Formaldehyde Levels of Unscavenged Capsules**

A reactor was charged with 34g of an acrylic acid-acrylamide copolymer solution, 18g of a melamine-formaldehyde precondensate, and 293g of water. This mixture was stirred until a clear solution with an approximate pH of 6.3 is obtained. Acetic acid was added until pH 5 was reached. This mixture was then stirred for 1 hour at 23°C at which time 210g of the fragrance core consisting of 105g of fragrance accord and 105g of Neobee M-5 oil was added and the mixture high-sheared until a mean droplet size of 8μm was reached. The temperature was raised to 80°C for 2 hours to cure the microcapsules. After 2 hours 40g of water was added and the mixture was cooled. Upon cooling a white slurry with pH 5-6 was obtained. ASTM formaldehyde anaylsis indicates formaldehyde levels in the slurry to be 1500-3000 ppm.

**Comparative EXAMPLE II**

**Post-curing formaldehyde scavenging with amide-type scavenger**

After curing and while hot, 25 g of solid ethylene urea and 15g of water are added to a 560g batch of fragrance microcapsules and the mixture cooled. Upon cooling a white slurry with pH 5-6 is obtained. ASTM formaldehyde analysis indicates formaldehyde levels in the slurry to be 50ppm.

**Comparative EXAMPLE III**

**Post-curing formaldehyde scavenging with β -dicarbonyl-type scavenger**

After curing a 560g batch of fragrance microcapsules, and while still hot, 30g of 1,3-cyclohexanedione and 10g of water are adde and the mixture cooled. Upon cooling a white slurry with pH 5-6 was obtained. ASTM formaldehyde analysis indicates formaldehyde levels in the slurry to be < 1ppm.

**Comparative EXAMPLE IV**

**Post-curing formaldehyde scavenging with amine-type scavenger**

After curing a 560g batch of fragrance microcapsules, and while still hot, 40g of Lupamin 1595 (poly(vinylamine)) are added, and the mixture cooled. Upon cooling a white slurry with pH 5-8 was obtained. ASTM D 5910-96 formaldehyde analysis indicates formaldehyde levels in the slurry to be 200ppm.

The above scavengers can also be added at various stages in the capsule making process, as opposed the typical last step.

**Comparative Example V**

**Partial removal of formaldehyde using activated carbon**

20g of pre-wetted activated carbon granules [Tiggs Corporation, Bridgeville, PA] was blended with 80 g of capsule slurry. The mixture was incubated at 45°C overnight. The activated carbon was filtered and the slurry was analyzed. The concentration of formaldehyde was found to be 1200 ppm. Analysis of the same slurry without activated carbon gave a value of formaldehyde level of 1520 ppm.

It is quite evident that the use of activated carbon has reduced the concentration of formaldehyde by about 21%. The pH of the final product was about a pH of 5.5.

**Comparative Example VI**

**Removal of formaldehyde, the synergistic use of 1, 4 phenelenediamine**

10g of 1, 4-phenelenediamine solution (1%) was blended with 10 g of capsule slurry and 4g of activated carbon supplied by Tiggs Corporation [Bridgeville, PA]. The mixture was incubated at 45 °C overnight. The slurry was analyzed and the amount of formaldehyde was found to be less than 1 ppm. Analysis of the same slurry without 1, 4-phenelenediamine and activated carbon gave a value of formaldehyde level of 1500 ppm. The use of both of 1, 4-phenelenediamine and activated carbon reduced the concentration of formaldehyde by 99.9%.

This significant reduction clearly demonstrated that complete removal of formaldehyde can be achieved by the current invention. The pH of the final slurry was 5.5.

**Comparative Example VII**

**Removal of Formaldehyde using Manganese Oxide**

A quantity of 1g of $MnO_2$ was mixed with 20 g of capsule slurry. The $MnO_2$ was purchased from Aldrich Chemicals, Milwaukee, Wisconsin, USA. The mixture was incubated at 45°C overnight. The slurry was analyzed and the amount of formaldehyde was found to be less than 4 ppm. Analysis of the same slurry without $MnO_2$ addition gave a value of formaldehyde level of 1500 ppm. As it can be seen the addition of $MnO_2$ has reduced the concentration of formaldehyde by a thousand fold. This significant reduction clearly demonstrated that nearly complete removal of formaldehyde can be achieved by the current invention. The pH of the final was 5.5.

**Comparative Example VIII**

**Removal of Formaldehyde using hydrogen peroxide**

100g of capsule slurry was mixed with 4.3 g of a 30% hydrogen peroxide solution purchased from Aldrich Chemicals, Milwaukee, Wisconsin, USA. In addition, 2g of a Fe (III) solution, 1000 ppm in $HNO_3$, was added as a catalyst. The mixture was left at room temperature overnight. The slurry was analyzed and the amount of formaldehyde was found to be 500 ppm. Analysis of the same slurry without $H_2O_2$ addition gave a value of formaldehyde level of 1500 ppm. Formaldehyde was reduced by 74%. The pH of the final was 5.5.

**Comparative EXAMPLE IX**

**Pre-process scavenger addition**

A reactor was charged with 34g of an acrylic acid-acrylamide copolymer solution, 18g of melamine-formaldehyde precondensate, 293g of water, and 25g of solid ethylene urea. This mixture was stirred until a clear solution with an approximate pH of 6.3 is obtained. Acetic acid was added until pH 5 is reached. This mixture was then stirred for 1 hour at 23°C at which time 210g of the fragrance core consisting of 105g of fragrance accord and 105g of Neobee M-5 oil was added and the mixture high-sheared until a mean droplet size of 8μm was reached. The temperature was raised to 80°C for 2 hours to cure the microcapsules. After 2 hours the mixture was cooled. Upon cooling a white slurry was obtained. ASTM formaldehyde analysis indicates formaldehyde levels in the slurry to be 50 ppm. The pH of the final slurry was 5.5.

**Comparative EXAMPLE X**

**Pre-curing scavenger addition**

After high-shearing 210g of fragrance core into an acidified mixture of 34g of an acrylic acid-acrylamide copolymer solution, 18g of a melamine-formaldehyde precondensate, and 293g of water to form an emulsion, 25g of ethylene urea were added. The temperature was raised to 80°C for 2 hours to cure the microcapsules. After 2 hours the mixture was cooled. Upon cooling a white slurry was obtained. ASTM formaldehyde analysis indicates formaldehyde levels in the slurry to be 50ppm. The pH of the final slurry was 5.5.

**Comparative EXAMPLE XI**

**Post-process scavenger addition**

Scavenging can be performed to existing fragrance microcapsule slurry. After a 560g batch of fragrance microcapsules has sat for 1 week, 25 g of solid ethylene urea and 15g of water were added and the mixture stirred. ASTM formaldehyde analysis indicates formaldehyde levels in the slurry to be 50ppm. The pH of the final slurry was 5.5.

**Comparative EXAMPLE XII**

**Preparation of control and high stability fragrance-containing microcapsules with different concentrations of urea and ethylene urea as the formaldehyde scavenger**

80 parts by weight of the fragrance mentioned at the start of this example section was admixed with 20 parts by weight of NEOBEE-M5 solvent thereby forming a 'fragrance/solvent composition'. The uncoated capsules were prepared by creating a polymeric wall to encapsulate fragrance/solvent composition droplets. To make the capsule slurries, a copolymer of acrylamide and acrylic acid was first dispersed in water together with a methylated melamine-formaldehyde resin. These two components were allowed to react under acidic conditions. The fragrance/solvent composition was then added into the solution and droplets of the desired size were achieved by high shear homogenization.

For the control microcapsule slurry, curing of the polymeric layer around the fragrance of Example A/solvent composition droplets was carried out at 80°C. For the high stability microcapsule slurry A (HS-A microcapsules), curing of the polymeric layer around the fragrance of Example A/solvent composition droplets was at 90°C. Urea and ethylene urea were added respectively into the microcapsule slurry at 3-fold and 2-fold equivalent molar concentrations of available

formaldehyde in the slurry. Slurry products containing urea/ethylene urea combinations at 3-fold/1.5-fold and 1.5-fold/ 1.5-fold equivalent molar concentrations of available formaldehyde in the slurry were also prepared for the use in Example 15. The resulting microcapsule slurry contained about 55% water, and about 45% filled microcapsules (35% core consisting of 80% fragrance oil, and 20% NEOBEE M-5 and 10% microcapsule wall). The pH of the final slurry was 5.5.

## Comparative EXAMPLE XIII

### Preparation of fabric conditioner samples containing the control and high stability microcapsules

In this example, a un-fragranced model fabric conditioner contained approximately 24 weight % cationic quaternary surfactants was used. Both control microcapsules and high stability (HS-A) microcapsules having shell walls composed of an acrylamide-acrylic acid co-polymer cross-linked with melamine-formaldehyde resin as described in Example XII was mixed with the model fabric conditioner separately using an overhead agitator at 300 rpm until homogeneous. The finished fabric conditioner base contained 0.5 weight % encapsulated fragrance oil, mentioned at the start of this example section, was used for washing experiment in Example XIV. A reference fabric conditioner base contained 0.5 weight % neat fragrance oil of Example I was also prepared. All fabric conditioner samples were stored at refrigerated 4 °C, 37 °C, and 43 °C for 4 weeks.

## Comparative EXAMPLE XIV

### Sensory performance and formaldehyde concentration of microcapsules containing-fabric conditioners

For sensory performance assessment, the fabric conditioner (pH 2-4) samples (90 grams per sample) referred to in Example I, supra, were introduced into a Sears, Roebuck and Co. KENMORE (Trademark of Sears Brands LLC of Hoffman Estates, Illinois (U.S.A.) 60179) washing machine during the rinse cycle thereof to condition 22 hand towels weighing a total of approximately 2400 gm. The 4-week aged fabric conditioner samples that contain 0.5 weight % fragrance from capsules were used. After rinsing, each of the hand towels, weighing 110 grams each, was line-dried for 2 days followed by sensory evaluation of 8 randomly-selected towels. The 8 randomly-selected dry towels were thus evaluated by a panel of ten people using the Label Magnitude Scale (LMS) from 0 to 99, wherein: 3 = "barely detectable"; 7 = "weak", 16 = "moderate", and 32 = "strong". Sensory scores were recorded before and after each of the eight randomly-selected towels contained in a separate polyethylene bag was rubbed by hand. Each rubbing test took place employing 5 time intervals @ 2 seconds per time interval for a total rubbing time of 10 seconds.

Corresponding fabric conditioner samples used for the sensory performance evaluation were subjected to the liquid chromatography for formaldehyde concentration determination.

**Table 1**

| Capsule Type | Molar conc. of ethylene urea to HCHO | Storage Temperature For 4 weeks | Pre-rub sensory intensity rating | Post-rub sensory intensity rating |
|---|---|---|---|---|
| Neat fragrance | N/A | 37 °C | 7.5 | 8.9 |
| HS-A microcapsules | 3-fold | 37 °C | 8.5 | 16.3 |
| HS-A microcapsules | 2-fold | 37 °C | 8.5 | 16.1 |
| Control microcapsules | 3-fold | 37 °C | 6.8 | 9.2 |
| Control microcapsules | 2-fold | 37 °C | 7.6 | 13.0 |
| Control microcapsules | 3-fold | 4 °C | 10.6 | 17.3 |

**Table 2**

| Capsule Type | Molar conc. of ethylene urea to HCHO | Storage Temperature | HCHO (ppm) in product at 2 weeks | HCHO (ppm) in product at 4 weeks |
|---|---|---|---|---|
| Neat fragrance | N/A | 37 °C | 0.9 | 0.9 |
| HS-A microcapsules | 3-fold | 37 °C | 4.7 | 5.0 |
| HS-A microcapsules | 2-fold | 37 °C | 10.6 | 10.9 |
| Control microcapsules | 3-fold | 37 °C | 3.5 | 6.1 |
| Control microcapsules | 2-fold | 37 °C | 10.5 | 13.8 |
| Control microcapsules | 3-fold | 4 °C | 3.5 | 4.0 |

As observed from Table 1, the fabric conditioner containing the high stability HS-A microcapsules evolved an aroma having greater pre-rub and post-rub intensities than the fabric conditioner containing the control capsules at each corresponding ethylene urea concentration. Data indicated the use of both ethylene urea at 2-fold equivalent molar concentration of available formaldehyde and an increased ethylene urea concentration (from 2-fold to 3-fold) in the control microcapsules resulted in a notable sensory performance decline upon sample aging. With the high stability HS-A microcapsules regardless the ethylene urea concentration, sensory performance, both pre-rub and post-rub intensities, upon sample aging was almost equivalent to that of the control capsules stored at 4 °C.

Data in Table 2 suggested the high stability HS-A microcapsules yielded comparable formaldehyde (HCHO) concentrations in the fabric conditioner when compared to the control microcapsules at each corresponding ethylene urea concentration. Thus, it was concluded that the high stability microcapsules is the most optimal option when ethylene urea or other highly efficient scavengers were used while having a detrimental effect to the sensory performance.

__Comparative EXAMPLE XV__

__Sensory performance and formaldehyde concentration of__ microcapsules containing-fabric conditioners

This example illustrates the benefit of using the urea/ethylene urea combination to obtain a reasonably low formaldehyde concentration in microcapsules containing-fabric conditioner while maintaining its sensory performance upon storage at 37°C.

**Table 3**

| Fragrance addition in fabric conditioner | Molar conc. of urea/ethylene urea to HCHO | HCHO (ppm) in product | Pre-rub sensory intensity rating | Post-rub sensory intensity rating |
|---|---|---|---|---|
| Control capsules | 3-fold/1.5-fold | 20.3 | 7.1 | 14.4 |
| Control capsules | 1.5-fold/1.5-fold | 20.6 | 8.7 | 14.9 |
| Control capsules | 0/2-fold | 13.8 | 6.7 | 10.4 |
| Neat fragrance | 0/0 | 0.9 | 7.5 | 8.9 |

As will be observed from Table 3, supra, the fabric conditioner containing ethylene urea at 2-fold molar concentration of formaldehyde resulted in about 33 % reduction of formaldehyde concentration in fabric conditioner when compared to that containing either 1.5-fold/1.5-fold or 3-fold/1.5-fold urea/ethylene combinations. Yet, data suggested that the control capsules containing 2-fold ethylene urea yielded the fabric softener with very minimum sensory benefit over the neat fragrance after 7-week storage at 43 °C. Microcapsules containing the combination of urea/ethylene urea performed advantageously superior to the control capsules containing 2-fold ethylene, both pre-rub and post-rub intensities. These data clearly demonstrated the optimal formaldehyde concentration-sensory stability performance from

microcapsules can be achieved by the intelligent selection of urea/ethylene urea combinations as the formaldehyde scavenger.

**Comparative Example XVI**

**Solid Support with Scavenging Surface Groups**

After curing and while hot, 40 g of Amberlite GT-73 (Rohm & Haas) were added to a 560g batch of fragrance microcapsules, and the mixture cooled. Upon cooling a white slurry with pH 5-6 was obtained. ASTM formaldehyde analysis indicates formaldehyde levels in the slurry to be 300ppm.

**Comparative Example XVII**

**Polymer with Scavenging Endgroups**

After curing a 560g batch of fragrance microcapsules, and while still hot, 30g of Poly(1,4-butanediol)-bis-(4-aminobenzoate) (Sigma-Aldrich) and 10g of water were added, and the mixture cooled. Upon cooling a white slurry with pH 5-6 was obtained. ASTM formaldehyde analysis indicates formaldehyde levels in the slurry to be 750ppm.

**Comparative Example XVIII**

**Polymer Pendant Functionalization**

500 g of Lupamin 9095 (poly(vinylamine)) and 40g of diethyl carbonate was refluxed for 5 hours. The solution was then evaporated to dryness at elevated temperature. Upon cooling a solid mass was obtained that was equivalent to poly(propylene urea). This solid was dissolved in water and used as in the Example XIX. Alternatively the poly(propylene urea) was obtained by substituting urea for the ethylcarbonate.

**Comparative Example XIX**

**Polymer with Scavenging Pendant Groups**

After curing a 560g batch of fragrance microcapsules, and while still hot, 40g of Lupamin 1595 (poly(vinylamine)) are added, and the mixture cooled. Upon cooling a white slurry with pH 5-8 is obtained. ASTM D 5910-96 formaldehyde analysis indicates formaldehyde levels in the slurry to be 200ppm.

The above scavengers can also be added at various stages in the capsule making process, as opposed the typical last step.

## Claims

1. A process for preparing a microcapsule product with reduced levels of formaldehyde, which comprises:

   a) providing an aqueous slurry of a plurality of microcapsules having a polymeric wall and a core comprising a fragrance, wherein the polymeric wall comprises an encapsulating polymer which is a cross-linked network of polymers comprising melamine-formaldehyde:acrylamide-acrylic acid copolymer wherein the mole ratio is in the range of from 9:1 to 1:9 and wherein the encapsulating polymer is cured at a temperature above 110°C;
   b) providing a stoichiometric excess of formaldehyde scavenger selected from the group consisting of β-dicarbonyl compounds, amides, imines, acetal formers, sulphur containing compounds, activated carbon, ammonium, organic amines, an oxidising agent and mixtures;
   c) admixing the microcapsules and scavenger;
   d) providing a microcapsule product with reduced levels of formaldehyde.

2. The process of Claim 1 where the amount of scavenger is present from an effective trace amount up to 10 times the molar excess of the molar equivalency of the potential formaldehyde present in the slurry.

3. The process of Claim 1 wherein the crosslinked network of polymers containing an active material is cured at a temperature above 180°C.

4. The process of Claim 1 wherein the crosslinked network of polymers containing an active material is cured for greater than 1 hour.

5. The process of Claim 1 wherein the crosslinked network of polymers containing an active material is cured for greater than 2 hours.

6. The process of Claim 1 wherein the pH of the slurry is from 1 to 9.

7. The process of Claim 6 wherein the pH of the slurry is from 2 to 8.

8. The process of Claim 6 wherein the pH of the slurry is from 2 to 6.

9. The process of Claim 1 wherein the scavenger comprises a combination of ethylene urea and urea.

10. The process of Claim 1 wherein the β-dicarbonyl compound is selected from the group consisting of acetoacetamide, ethyl acetoacetate, N,N-Dimethyleneacetamide, acetoacetone, dimethyl-1, 3-acetonedicarboxylate, 1,3,-acetonedicarboxylic acid, resorcinol, 1,3-cyclohexadione, barbituric acid, salicyclic acid, 5,5-dimethyl-1,3-cyclohexanedione, 2,2-dimethyl-1,3-dioxane-4,6-dione and a mixture thereof.

11. The process of Claim 1 wherein the amide compound is selected from the group consisting of urea, ethylene urea, propylene urea, ε-caprolactam, glycouril, hydantoin, 2-oxazolidinone, 2-pyrrolidinone, uracil, barbituric acid, thymine, uric acid, allantoin, 4,5-dihydroxyethylene urea, monomethylol-4-hydroxy-4-methoxy-5,5-dimethyl-propylurea, polyamides, nylon and mixtures thereof.

12. The process of Claim 11 wherein the amide compound is ethylene urea.

13. The process of Claim 1 wherein the amine compound is selected from the group consisting of poly(vinyl)amine, arginine, lysine, proteins containing lysine and asparagines, hydrazines, aromatic amines, aromatic diamines, aminobenzoic acid derivatives, amine phenols, melamine, 2-amino-2-methyl-1-propanol, benzoguanamine and mixtures thereof.

14. The process of Claim 13 wherein the proteins is selected from casein, gelatine, gluten, whey protein, soy protein, collagen and mixtures thereof.

15. The process of Claim 13 wherein the hydrazines is 2,4-dinitrophenzylhydrazine.

16. The process of Claim 1 wherein the acetal forming compound is selected from the group consisting of diethylene glycol, saccharides, polysaccharides and mixtures thereof.

17. The process of Claim 16 wherein the saccharides is selected from glucose, D-sorbitol, sucrose, tannins/tannic acid and mixtures thereof.

18. The process of Claim 16 wherein the polysaccharide is selected from pectin, starch and mixtures thereof.

19. The process of Claim 1 wherein the sulphur containing compound is selected from the group consisting of bisulfite, cysteine and mixtures thereof.

20. The process of Claim 1 wherein the oxidising agent is selected from the group consisting of manganese oxide, hydrogen peroxide, hypochlorite, chlorine, peracids, oxygen, ozone, chlorine dioxygen, sodium percarbonate, sodium perborate,tetraacetylethylenediamine, transition metal complexes, metalloporphyrins, peroxidases and mixtures thereof.

21. The process of Claim 1 wherein the mole ratio of melamine-formaldehyde:acrylamide-acrylic acid copolymer is in the range of from 5:1 to 1:5.

22. The process of Claim 1 wherein the mole ratio of melamine-formaldehyde:acrylamide-acrylic acid copolymer is in the range of from 2:1 to 1:2.

**23.** The process of Claim 1 wherein the microcapsule product is further coated by a cationic polymer.

**24.** The process of Claim 23 wherein the cationic polymer is selected from polysaccharides, cationically modified starch and cationically modified guar, polysiloxanes, poly diallyl dimethyl ammonium halides, copolymers of poly diallyl dimethyl ammonium chloride and vinyl pyrrolidone, acrylamides, imidazoles, imidazolinium halides, imidazolium halides and mixtures.

**25.** The method of Claim 24 wherein the cationic polymer is selected from a cationically modified starch, cationically modified guar and mixtures thereof.

**26.** The process of Claim I wherein the encapsulating polymer is cured at a temperature above 120 °C.

**Patentansprüche**

**1.** Ein Prozess zur Vorbereitung eines Mikrokapselprodukts mit reduziertem Formaldehydanteil, der Folgendes umfasst:

a) Bereitstellen eines wässrigen Schlamms aus einer Reihe von Mikrokapseln mit einer Polymerwand und einem Kern bestehend aus einem Duftstoff, wobei die Polymerwand ein einkapselndes Polymer umfasst, das ein vernetztes Polymernetz ist, das aus Melaminformaldehyd:Acrylamid-Acrylsäurecopolymer besteht, wobei das Molverhältnis im Bereich von 9:1 bis 1:9 liegt und wobei das einkapselnde Polymer bei einer Temperatur von über 110°C gehärtet wird;
b) Bereitstellen eines stöchiometrischen Überschusses an Formaledhydfänger, der aus der gruppe bestehend aus β-Dicarbonylverbindungen, Amiden, Iminen, Acetalbildnern, schwefelhaltigen Verbindungen, aktiviertem Kohlenstoff, Ammonium, organischen Aminen, einem Oxidationsmittel und Mischungen ausgewählt wird;
c) Beimischen von Mikrokapseln und Fänger;
d) Bereitstellen eines Mikrokapselprodukts mit reduziertem Formaldehydgehalt.

**2.** Der Prozess entsprechend Anspruch 1, bei dem die Menge an Fänger von einem Spurenanteil bis zum Zehnfachen des Molüberschusses der Molentsprechung des Formaldehydpotentials, das im Schlamm enthalten ist, vorhanden ist.

**3.** Der Prozess entsprechend Anspruch 1, wobei das vernetzte Polymernetz, das ein aktives Material enthält, bei einer Temperatur von über 180°C gehärtet wird.

**4.** Der Prozess entsprechend Anspruch 1, wobei das vernetzte Polymernetz, das ein aktives Material enthält, für länger als 1 Stunde gehärtet wird.

**5.** Der Prozess entsprechend Anspruch 1, wobei das vernetzte Polymernetz, das ein aktives Material enthält, für länger als 2 Stunden gehärtet wird.

**6.** Der Prozess entsprechend Anspruch 1, wobei der pH-Wert des Schlamms zwischen 1 und 9 liegt.

**7.** Der Prozess entsprechend Anspruch 6, wobei der pH-Wert des Schlamms zwischen 2 und 8 liegt.

**8.** Der Prozess entsprechend Anspruch 6, wobei der pH-Wert des Schlamms zwischen 2 und 6 liegt.

**9.** Der Prozess entsprechend Anspruch 1, wobei der Fänger eine Kombination von Ethylenharnstoff und Harnstoff umfasst.

**10.** Der Prozess entsprechend Anspruch 1, wobei die β-Dicarbonylverbindung aus der Gruppe bestehend aus Folgenden ausgewählt wird, nämlich Acetacetamid, Ethylacetacetat, N,N-Dimethylenacetamid, Acetaceton, Dimethyl-1, 3-Acetondicarboxylat, 1,3-Acetondicarboxylsäure. Resorcinol, 1,3-Cyclohexadion, Barbitursäure, Salicylsäure, 5,5-Dimethyl-1,3-Cyclohexandion, 2,2-Dimethyl-1,3-Dioxan-4,6-Dion und einer Mischung dieser.

**11.** Der Prozess entsprechend Anspruch 1, wobei die Amidverbindung aus der Gruppe bestehend aus folgenden ausgewählt wird, nämlich Harnstoff, Ethylenharnstoff, Propylenharnstoff, ε-Caprolactam, Glycouril, Hydantoin, 2-Oxazolidinon, 2-Pyrrolidinon, Uracil, Barbitursäure, Thymin, Harnsäure, Allantoin, 4,5-Dihydroxyethylenharnstoff, Monomethylol-4-Hydroxy-4-Methoxy-5,5-Dimethylpropylharnstoff, Polyamide, Nylon und Mischungen dieser.

**12.** Der Prozess entsprechend Anspruch 11, wobei die Amidverbindung Ethylenharnstoff ist.

**13.** Der Prozess entsprechend Anspruch 1, wobei die Amidverbindung aus der Gruppe bestehend aus folgenden ausgewählt wird, nämlich Poly(vinyl)amin, Arginin, Lysin, Proteine, die Lysin und Asparagine enthalten, Hydrazine, aromatische Amine, aromatische Diamine, Aminobenzoesäurederivate, Aminphenole, Melamin, 2-Amino-2-Methyl-1-Propanol, Benzoguanamin und Mischungen dieser.

**14.** Der Prozess entsprechend Anspruch 13, wobei die Proteine aus Casein, Gelatine, Gluten, Molkenprotein, Sojaprotein, Collagen und Mischungen dieser ausgewählt werden.

**15.** Der Prozess entsprechend Anspruch 13, wobei das Hydrazin 2,4-Dinotrophenzylhydrazin ist.

**16.** Der Prozess entsprechend Anspruch 1, wobei die acetalbildende Verbindung aus der Gruppe bestehend aus Diethylenglycol, Sacchariden, Polysacchariden und Mischungen dieser ausgewählt wird.

**17.** Der Prozess entsprechend Anspruch 16, wobei die Saccharide aus Glucose, D-Sorbitol, Sucrose, Tanninen/Gerbsäure und Mischungen dieser ausgewählt werden.

**18.** Der Prozess entsprechend Anspruch 16, wobei das Polysaccharid aus Pectin, Stärke und Mischungen dieser ausgewählt wird.

**19.** Der Prozess entsprechend Anspruch 1, wobei die schwefelhaltige Verbindung aus der Gruppe bestehend aus Bisulfit, Cystein und Mischungen dieser ausgewählt wird.

**20.** Der Prozess entsprechend Anspruch 1, wobei das Oxidationsmittel aus der Gruppe bestehend aus Folgenden ausgewählt wird, nämlich Manganoxid, Wasserstoffperoxid, Hypochlorit, Chlor, Persäuren, Sauerstoff, Ozon, Chlorsauerstoff, Natriumpercarbonat, Natriumperborat, Tetraacetylethylendiamin, Übergangsmetallkomplexe, Metallporphyrine, Peroxidasen und Mischungen dieser.

**21.** Der Prozess entsprechend Anspruch 1, wobei das Molverhältnis von Melaminformaldehyd: Acrylsäurecopolymer im Bereich von 5:1 bis 1:5 liegt.

**22.** Der Prozess entsprechend Anspruch 1, wobei das Molverhältnis von Melaminformaldehyd: Acrylsäurecopolymer im Bereich von 2:1 bis 1:2 liegt.

**23.** Der Prozess entsprechend Anspruch 1, wobei das Mikrokapselprodukt weiterhin mit einem kationischen Polymer beschichtet wird.

**24.** Der Prozess entsprechend Anspruch 23, wobei das kationische Polymer aus Folgenden ausgewählt wird, nämlich Polysacchariden, kationisch modifizierter Stärke und kationisch modifiziertem Guar, Polysiloxanen, Polydiallyldimethylammoniumhalliden, Copolymeren von Polydiallyldimethylammoniumchlorid und Vinylpyrrolidon, Acrylamiden, Imidazolen, Imidazoliniumhaliden, Imidazoliniumhaliden und Mischungen dieser.

**25.** Der Prozess entsprechend Anspruch 24, wobei das kationische Polymer aus einer kationisch modifizierten Stärke, kationisch modifiziertem Guar und Mischungen dieser ausgewählt wird.

**26.** Der Prozess entsprechend Anspruch 1, wobei das einkapselnde Polymer bei einer Temperatur von über 120°C gehärtet wird.

## Revendications

**1.** Un processus de préparation d'un produit en microcapsules avec des niveaux réduits de formaldéhyde, qui comprend :

a) la fourniture d'une boue aqueuse d'une pluralité de microcapsules possédant une paroi polymère et un noyau contenant une fragrance, où la paroi polymère comprend un polymère d'encapsulation qui est un réseau réticulé de polymères contenant un copolymère mélamine-formaldéhyde:acrylamide-acide acrylique où le rapport molaire se situe dans la plage de 9:1 à 1:9 et où le polymère d'encapsulation est durci à une température supérieure à 110°C,
b) la fourniture d'un excès stoechiométrique de piégeur de formaldéhyde sélectionné dans le groupe se composant de composés β-dicarbonyle, amides, imines, formeurs d'acétal, composés contenant du soufre, carbone activé, ammonium, amines organiques, un agent d'oxydation et des mélanges,
c) l'admixtion des microcapsules et du piégeur,
d) la fourniture d'un produit en microcapsules avec des niveaux réduits de formaldéhyde.

**2.** Le processus selon la Revendication 1 où la quantité de piégeur est présente à partir d'une quantité à l'état de trace jusqu'à dix fois l'excès molaire de l'équivalence molaire du formaldéhyde potentiel présent dans la boue.

**3.** Le processus selon la Revendication 1 où le réseau réticulé de polymères contenant un matériau actif est durci à une température supérieure à 180°C.

**4.** Le processus selon la Revendication 1 où le réseau réticulé de polymères contenant un matériau actif est durci pendant plus d'une heure.

**5.** Le processus selon la Revendication 1 où le réseau réticulé de polymères contenant un matériau actif est durci pendant plus de deux heures.

**6.** Le processus selon la Revendication 1 où le pH de la boue est de 1 à 9.

**7.** Le processus selon la Revendication 6 où le pH de la boue est de 2 à 8.

**8.** Le processus selon la Revendication 6 où le pH de la boue est de 2 à 6.

**9.** Le processus selon la Revendication 1 où le piégeur contient une combinaison d'urée d'éthylène et d'urée.

**10.** Le processus selon la Revendication 1 où le composé de β-dicarbonyle est sélectionné dans le groupe se composant d'acétoacétamide, acétoacétate d'éthyle, N,N Diméthylèneacétamide, acétoacétone, diméthyle-1, 3-acétonedicarboxylate, 1,3,-acide acétonedicarboxylique, résorcinol, 1,3-cyclohexadione, acide barbiturique, acide salicyclique, 5,5-diméthyle-1,3-cyclohexanedione, 2,2-diméthyle-1,3-dioxane-4,6-dione et un mélange de ceux-ci.

**11.** Le processus selon la Revendication 1 où le composé d'amide est sélectionné dans le groupe se composant d'urée, urée d'éthylène, urée de propylène, ε-caprolactame, glycourile, hydantoïne, 2-oxazolidinone, 2-pyrrolidinone, uracile, acide barbiturique, thymine, acide urique, allantoïne, urée 4,5-dihydroxyéthylène, monométhylole-4-hydroxy-4-méthoxy-5,5-diméthyle-propylurée, polyamides, nylon et des mélanges de ceux-ci.

**12.** Le processus selon la Revendication 11 où le composé d'amide est urée d'éthylène.

**13.** Le processus selon la Revendication 1 où le composé d'amine est sélectionné dans le groupe se composant de poly(vinyle)amine, arginine, lysine, lysine contenant des protéines et asparagines, hydrazines, amines aromatiques, diamines aromatiques, dérivés d'acide aminobenzoïque, phénols d'amine, mélamine, 2-amino-2-méthyle-1-propanol, benzoguanamine et des mélanges de ceux-ci.

**14.** Le processus selon la Revendication 13 où les protéines sont sélectionnées parmi caséine, gélatine, gluten, protéine lactosérique, protéine de soja, collagène et des mélanges de ceux-ci.

**15.** Le processus selon la Revendication 13 où les hydrazines sont 2,4-dinitrophenzylhydrazine.

**16.** Le processus selon la Revendication 1 où le composé de formation d'acétal est sélectionné dans le groupe se composant de diéthylène glycol, saccharides, polysaccharides et des mélanges de ceux-ci.

**17.** Le processus selon la Revendication 16 où les saccharides sont sélectionnés parmi glucose, D-sorbitol, sucrose, tannins/acide tannique et des mélanges de ceux-ci.

**18.** Le processus selon la Revendication 16 où le polysaccharide est sélectionné parmi pectine, amidon et des mélanges de ceux-ci.

**19.** Le processus selon la Revendication 1 où le composé contenant du soufre est sélectionné dans le groupe se composant de bisulfite, cystéine et des mélanges de ceux-ci.

**20.** Le processus selon la Revendication 1 où l'agent d'oxydation est sélectionné dans le groupe se composant d'oxyde de manganèse, peroxyde d'hydrogène, hypochlorite, chlore, peracides, oxygène, ozone, dioxygène de chlore, percarbonate de sodium, perborate de sodium, tétraacétyléthylènediamine, complexes métalliques de transition, métalloporphyrines, peroxydases et des mélanges de ceux-ci.

**21.** Le processus selon la Revendication 1 où le rapport molaire du copolymère mélamine formaldéhyde:acrylamide-acide acrylique se situe dans la plage de 5:1 à 1:5.

**22.** Le processus selon la Revendication 1 où le rapport molaire du copolymère mélamine-formaldéhyde:acrylamide-acide acrylique se situe dans la plage de 2:1 à 1:2.

**23.** Le processus selon la Revendication 1 où le produit en microcapsules est en outre enduit d'un polymère cationique.

**24.** Le processus selon la Revendication 23 où le polymère cationique est sélectionné parmi polysaccharides, amidon modifié cationiquement et guar modifié cationiquement, polysiloxanes, halogénures d'ammonium poly diallyl diméthyle, copolymères de chlorure d'ammonium poly diallyl diméthyle et pyrrolidone de vinyle, acrylamides, imidazoles, halogénures d'imidazolinium, halogénures d'imidazolium et des mélanges.

**25.** Le procédé selon la Revendication 24 où le polymère cationique est sélectionné parmi amidon modifié cationiquement, guar modifié cationiquement et des mélanges de ceux-ci.

**26.** Le processus selon la Revendication 1 où le polymère d'encapsulation est durci à une température supérieure à 120°C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4081384 A
- US 5112688 A
- US 5145842 A
- US 6248703 B
- WO 03035245 A
- US 5194674 A
- US 5446195 A
- US 123898 A
- US 6261483 B
- US 4915854 A, Mao
- US 4412934 A
- US 4634551 A
- US 4966723 A, Hodge
- US 298903 A
- US 298650 A
- US 298906 A
- US 298904 A
- EP 408131 A
- US 4430243 A
- US 5246621 A
- US 5244594 A
- EP 549272 A
- US 5194416 A
- US 5114606 A
- US 5114611 A
- EP 384503 A
- EP 306089 A
- US 4601845 A
- US 4711748 A
- US 4728455 A
- US 4626373 A
- US 4119557 A
- DE 2054019
- US 6335315 B
- US 5674832 A
- US 5759990 A
- US 5877145 A
- US 5574179 A
- US 5562849 A
- US 5545350 A
- US 5545340 A
- US 5411671 A
- US 5403499 A
- US 5288417 A
- US 4767547 A
- US 4424134 A
- US 6069122 A
- US 5990065 A
- US 6020294 A
- US 6017871 A
- US 5968881 A
- US 5962386 A
- US 5939373 A
- US 5914307 A
- US 5902781 A
- US 5705464 A
- US 5703034 A
- US 5703030 A
- US 5679630 A
- US 5597936 A
- US 5581005 A
- US 5559261 A
- US 4515705 A
- US 5169552 A
- US 4714562 A
- US 5929022 A
- US 5916862 A
- US 5731278 A
- US 5565145 A
- US 5470507 A
- US 5466802 A
- US 5460752 A
- US 5458810 A
- US 5458809 A
- US 5288431 A
- US 5194639 A
- US 4968451 A
- US 4597898 A
- US 4561998 A
- US 4550862 A
- US 4537707 A
- US 4537706 A
- US 4446042 A
- US 4318818 A
- US 6162423 A
- US 5968286 A
- US 5935561 A
- US 5932203 A
- US 5837661 A
- US 5776443 A
- US 5756436 A
- US 5661118 A
- US 5618523 A
- US 5275755 A
- US 5085857 A
- US 4673568 A
- US 4387090 A
- US 4705681 A

- US 2800457 A
- US 3870542 A
- US 3516941 A
- US 3415758 A
- US 3041288 A
- US 6329057 B
- US 6545084 B
- US 3516846 A
- US 6297203 B
- US 6200554 B
- US 6057404 A
- US 4395541 A
- US 4597962 A
- US 5849313 A
- WO 9518096 A1
- EP 0737183 B1
- EP 0327927 A2
- EP 0162376 W
- EP 1995000400185 A
- US 6190678 B
- WO 0162376 A1

**Non-patent literature cited in the description**


- **TOMASINO et al.** *Textile Chemist and Colorist,* 1984, vol. 16 (12
- Bleaching Agents (Survey. Kirk Othmer's Encyclopedia of Chemical Technology. John Wiley & Sons, 1992, vol. 4, 271-300
- **LEE et al.** *J. Microencapsulation,* 2002, vol. 19 (5), 559-569
- **ISAMU KASHIKI ; AKIRA SUZUKI.** *Ind. Eng. Chem. Fundam.,* 1986, vol. 25, 120-125
- Encyclopedia of Polymers and Thickeners for Cosmetics. **ROBERT LOCHHEAD ; WILLIAM FROM.** Cosmetics & Toiletries. May 1993, vol. 108, 95-138
- **O. B. WURZBURG.** Modified Starches: Properties & Uses. CRC Press, 1986
- **DAVID DEVORE ; STEPHEN FISHER.** Polyamido Amine and Polyaminoamide-epichlorohydrin resins. *Tappi Journal,* 1993, vol. 76 (8), 121-128
- Polyamide-polyamine-epichlorohydrin resins. **W. W. MOYER ; R. A. STAGG.** Wet-Strength in Paper and Paperboard, Tappi Monograph Series No. 29. Tappi Press, 1965, 33-37